# EUROPEAN PATENT APPLICATION

(11) **EP 4 280 483 A1**
(43) Date of publication of application: **22.11.2023**
(21) Application number: 22776025.3
(22) Date of filing: 21.03.2022
(51) Int. Cl.: H04B 17/345, H04W 84/04, H04W 92/20

(54) **METHOD AND DEVICE FOR MEASURING INTERFERENCE IN WIRELESS COMMUNICATION SYSTEM**

(30) Priority: 23.03.2021 KR 20210037438
(71) Applicant: Samsung Electronics Co., Ltd., Suwon-si, Gyeonggi-do 16677 (KR)
(72) Inventor: CHOI, Seunghoon, Suwon-si, Gyeonggi-do 16677 (KR); RYU, Hyunseok, Suwon-si, Gyeonggi-do 16677 (KR); PARK, Sungjin, Suwon-si, Gyeonggi-do 16677 (KR); SHIN, Cheolkyu, Suwon-si, Gyeonggi-do 16677 (KR)
(74) Representative: Nederlandsch Octrooibureau
(86) International application number: PCT/KR2022/003932
(87) International publication number: WO 2022/203324

(57) **Abstract**

A method of reporting, by an electronic device, to a base station or a parent node, interference of a target signal transmitted from another electronic device may include receiving, from the base station or the parent node, beam-related information and configuration information for measuring the interference of the target signal, determining at least one direction for measuring the interference, based on the beam-related information, measuring the interference of the target signal, based on the received configuration information and the determined at least one direction, and transmitting information about the measured interference to the base station or the parent node.

## Description

### Technical Field

Embodiments described in the present disclosure relate to a method and apparatus for measuring interference in a wireless communication system.

### Background Art

To meet the increase in demand with respect to wireless data traffic after the commercialization of 4th generation (4G) communication systems, considerable efforts have been made to develop pre-5th generation (5G) communication systems or 5G communication systems. 5G communication systems or pre-5G communication systems are called beyond 4G network communication systems or post long-term evolution (LTE) systems.

In order to achieve a high data rate, 5G communication systems are being developed to be implemented in a super-high frequency band (millimeter wave (mmWave)), (e.g., a band of 60 GHz). In order to alleviate a path loss of radio waves and increase a propagation distance of radio waves in a super-high frequency band, technologies, such as beamforming, massive multiple input multiple output (MIMO), full dimensional MIMO (FD-MIMO), array antenna, analog beamforming, and large scale antenna, are being discussed for 5G communication systems.

In order to improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation, and the like are also being developed in 5G communication systems.

Also, for 5G systems, other technologies have been developed, e.g., hybrid frequency-shift keying (FSK) and quadrature amplitude modulation (QAM) (FQAM) and sliding window superposition coding (SWSC), which are advanced coding modulation (ACM) schemes, and filter bank multi carrier (FBMC), non-orthogonal multiple access (NOMA) and sparse code multiple access (SCMA), which are advanced access schemes.

The Internet has evolved from human-based connection networks, where humans create and consume information, to Internet of Things (IoT) networks, where distributed configurations including objects and the like exchange information with each other and process the information. Internet of everything (IoE) technology, in which IoT technology is combined with technology for processing big data through a connection with a cloud server, is also emerging. In order to implement IoT, sensing technology, wired/wireless communication and network infrastructures, service interface technology, and security technology are required, and technologies for an inter-object connection, such as sensor networks, machine to machine (M2M) communication, and machine-type communication (MTC), have recently been studied. In an IoT environment, intelligent Internet technology services may be provided to collect and analyze data obtained from objects connected to each other to create new value in human life. IoT may be applied to a variety of areas, such as smart homes, smart buildings, smart cities, smart cars or connected cars, smart grid, health care, smart home appliances and advanced medical services through convergence and combination between existing information technologies (IT) and various industrial applications.

Recently, various attempts have been made to apply 5G communication systems to IoT networks. For example, attempts have been made to implement technologies, such as sensor networks, M2M communication, and MTC, via 5G communication technologies, such as beamforming, MIMO, and array antenna. Using a cloud radio access network (RAN) as big data processing technology described above may also be considered as an example of convergence of 5G technology and IoT technology.

Also, recently, various studies have been conducted to use integrated access and backhaul (IAB) technology.

### Disclosure

### Technical Problem

When mobile termination (MT) of one integrated access and backhaul (IAB) node transmits uplink backhaul data and MT of another IAB node receives downlink backhaul data, the MT of the receiving IAB node may be interfered by the MT of the transmitting IAB node. Accordingly, a method and apparatus for measuring interference between IAB nodes and reducing an effect of the interference are required.

### Technical Solution

According to an embodiment of the present disclosure, a method of reporting, by an electronic device, to a base station or a parent node, interference of a target signal transmitted from another electronic device includes receiving, from the base station or the parent node, beam-related information and configuration information for measuring the interference of the target signal, determining at least one direction for measuring the interference, based on the beam-related information, measuring the interference of the target signal, based on the received configuration information and the determined at least one direction, and transmitting information about the measured interference to the base station or the parent node.

According to an embodiment of the present disclosure, a method of obtaining, by a base station, from an electronic device, a measurement result for interference of a target signal transmitted from another electronic device, includes transmitting, to the electronic device, beam-related information and configuration information for measuring the interference of the target signal, and receiving, from the electronic device, at least one direction determined based on the beam-related information, and information about the interference of the target signal measured based on the configuration information.

According to an embodiment of the present disclosure, an electronic device for reporting, to a base station or a parent node, interference of a target signal transmitted from another electronic device, includes a transceiver configured to transmit or receive a signal, and at least one processor connected to the transceiver, wherein the at least one processor is configured to receive, from the base station or the parent node, beam-related information and configuration information for measuring the interference of the target signal, determine at least one direction for measuring the interference, based on the beam-related information, measure the interference of the target signal, based on the received configuration information and the determined at least one direction, and transmit information about the measured interference to the base station or the parent node.

### Description of Drawings

FIG. 1 is a diagram showing an example of a wireless communication system in which an integrated access and backhaul (IAB) node is operated.
FIG. 2 is a diagram schematically showing an example in which resources are multiplexed between a backhaul link and an access link of an IAB node.
FIG. 3 is a diagram showing an example in which resources are multiplexed in a time domain between a backhaul link and an access link in an IAB node.
FIG. 4 is a diagram showing an example in which resources are multiplexed in a frequency domain or spatial domain between a backhaul link and an access link in an IAB node.
FIG. 5 is a diagram schematically showing a structure of an IAB node.
FIG. 6 is a diagram for describing a communication method for simultaneous transmission/reception between mobile termination (MT) and a distributed unit (DU) in an IAB node, in a wireless communication system according to an embodiment of the present disclosure.
FIG. 7 is a diagram showing transmitter and receiver structures supporting hybrid beamforming that may be used in a new radio (NR) system.
FIG. 8A is a diagram showing a sounding reference signal (SRS) operating scenario according to an embodiment of the present disclosure.
FIG. 8B is a diagram showing an SRS operating scenario according to another embodiment of the present disclosure.
FIG. 8C is a diagram showing an SRS operating scenario according to another embodiment of the present disclosure.
FIG. 9A is a diagram for describing SRS measurement scenarios in an NR system, according to an embodiment of the present disclosure.
FIG. 9B is a diagram for describing SRS measurement scenarios in an NR system, according to another embodiment of the present disclosure.
FIG. 10 is a diagram for describing an SRS measurement scenario of an IAB node in an NR system, according to an embodiment of the present disclosure.
FIG. 11 is a diagram showing operations of a base station or a parent IAB node in a wireless communication system, according to an embodiment of the present disclosure.
FIG. 12 is a diagram showing operations of a terminal or an IAB node in a wireless communication system, according to an embodiment of the present disclosure.
FIG. 13 is a diagram showing a configuration of a terminal, according to an embodiment of the present disclosure.
FIG. 14 is a diagram showing a configuration of a base station, according to an embodiment of the present disclosure.
FIG. 15 is a diagram showing a configuration of an IAB node, according to an embodiment of the present disclosure.

### Mode for Invention

Hereinafter, exemplary embodiments of the present disclosure will be described in detail with reference to the accompanying drawings. Here, it should be noted that like reference numerals denote like elements in the accompanying drawings. Also, detailed descriptions about known functions and configurations that may blur the gist of the present disclosure will be omitted.

While describing embodiments in the present specification, descriptions of technical contents that are well known in the technical field to which the present disclosure belongs and are not directly related to the present disclosure may be omitted.

For convenience of description, some components may be exaggerated, omitted, or roughly illustrated in the accompanying drawings. Also, a size of each component do not fully reflect the actual size, and is not limited to an illustrated size.

Advantages and features of the present disclosure and methods of accomplishing the same may be understood more readily by reference to the following detailed description of the embodiments and the accompanying drawings. However, the present disclosure is not limited to the embodiments described below, and may be implemented in other various forms. According to various embodiments, it will be understood that blocks in flowcharts or combinations of the flowcharts may be performed by computer program instructions. These computer program instructions may be loaded into a processor of a general-purpose computer, special purpose computer, or other programmable data processing apparatus, and the instructions, which are executed via the processor of the computer or programmable data processing apparatus may generate means for implementing functions specified in the flowchart block(s). The computer program instructions may be stored in a computer-executable or computer-readable memory capable of directing a computer or another programmable data processing apparatus to implement a function in a particular manner, and the instructions stored in the computer-executable or computer-readable memory may also be capable of producing manufacturing items containing instruction units for performing the functions described in the flowchart block(s). The computer program instructions may also be loaded into a computer or another programmable data processing apparatus, and instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks shown in succession may in fact be executed substantially concurrently or the blocks may sometimes be executed in the reverse order, depending upon the functionality involved.

Here, the term "unit" or "-er/-or" used in the embodiments means a software component or hardware component such as a field-programmable gate array (FPGA) or an application-specific integrated circuit (ASIC), and performs a specific function. However, the term "unit" or "-er/or" is not limited to software or hardware. The "unit" or "-er/or" may be formed so as to be in an addressable storage medium, or may be formed so as to operate one or more processors. Thus, for example, the term "unit" or "-er/or" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" or "-ers/ors" may be associated with the smaller number of components and "units" or "-ers/ors", or may be divided into additional components and "units" "-ers/ors". Furthermore, the components and "units" or "-ers/ors" may be embodied to reproduce one or more central processing units (CPUs) in a device or security multimedia card.

Wireless communication systems have been developed from wireless communication systems providing voice centered services in the early stage toward broadband wireless communication systems providing high-speed and/or high-quality packet data services, like communication standards of high speed packet access (HSPA), long term evolution (LTE) or evolved universal terrestrial radio access (E-UTRA), LTE-advanced (LTE-A), and LTE-Pro of the 3GPP, high rate packet data (HRPD) and ultra mobile broadband (UMB) of 3GPP2, IEEE 802.16e or the like.

As a representative example of the broadband wireless communication system, the LTE system has adopted an orthogonal frequency division multiplexing (OFDM) scheme in a downlink (DL) and has adopted a single carrier frequency division multiple access (SC-FDMA) scheme in an uplink (UL). The UL may be understood as a radio link through which a terminal (a user equipment (LTE) or a mobile station (MS)) transmits data or a control signal to a base station (BS) (eNode B), and the DL may be understood as a radio link through which a BS transmits data or a control signal to a terminal. In such a multiple access scheme, data or control information of each user may be classified by generally assigning and operating the data or control information such that time-frequency resources for transmitting the data or control information for each user do not overlap each other, that is, such that orthogonality is established.

As a post LTE communication system, a 5^{th} generation (5G) (or new radio (NR)) communication system has to be able to freely reflect various requirements of a user and a service provider, and thus, services satisfying various requirements at the same time need to be supported. The services considered for the 5G communication system may include enhanced mobile broadband (eMBB), massive machine type communication (mMTC), ultra reliability low latency communication (hereinafter, URLLC), etc.

The eMBB aims to provide a higher data transfer rate than a data transfer rate supported by the LTE, LTE-A, or LTE-Pro system. For example, in the 5G communication system, the eMBB should be able to provide a peak data rate of 20 Gbps in a downlink and a peak data rate of 10 Gbps in an uplink from the viewpoint of one base station. In addition, the 5G communication system needs to provide the increased user perceived data rate of the terminal simultaneously with providing the peak data rate. In order to satisfy such requirements, improvement of various transmitting/receiving technologies including a further improved multiple-input and multiple-output (MIMO) transmission technology may be demanded. In addition, signals are transmitted using a transmission bandwidth of up to 20 MHz in a 2 GHz band used by the current LTE system, but the 5G communication system uses a bandwidth wider than 20 MHz in a frequency band of 3 to 6 GHz or more than 6 GHz, thereby satisfying a data rate required in the 5G communication system.

Also, the mMTC is being considered to support application services such as Internet of things (IoT) in the 5G communication system. The mMTC is required for an access support of a large-scale terminal in a cell, coverage enhancement of a terminal, improved battery time, and cost reduction of a terminal in order to efficiently provide the IoT. The IoT needs to be able to support a large number of terminals (e.g., 1,000,000 terminals/km²) in a cell because it is attached to various sensors and various devices to provide communication functions. In addition, the terminals supporting the mMTC are more likely to be positioned in shaded areas not covered by a cell, such as the underground of a building due to nature of services, and thus, the terminal requires a wider coverage than other services provided by the 5G communication system. The terminals that support the mMTC should be configured as inexpensive terminals and require very long battery lifetime, such as 10 to 15 years, because it is difficult to frequently replace batteries of the terminals.

Lastly, the URLLC is a cellular-based wireless communication system used for a specific purpose (mission-critical). For example, the URLLC may be understood as a service used in remote control for a robot or machinery, industrial automation, unmanned aerial vehicle, remote health care, or emergency alert. Accordingly, very low latency and very high reliability may be required for the URLLC. For example, a service supporting the URLLC may require air interface latency smaller than 0.5 milliseconds (msec) and at the same time, may require a packet error rate of 10⁻⁵ or less. Accordingly, for the service supporting the URLLC, the 5G system is required to provide a transmit time interval (TTI) shorter than those for other services while assigning a broad resource in a frequency band to secure reliable communication links.

The three services, that is, eMBB, URLLC, and mMTC, of the 5G system may be multiplexed in one system and may be transmitted. In this case, the services may use different transmission and reception methods and different transmission and reception parameters in order to meet their different requirements.

In the 5G system, coverage may be limited due to attenuation of a propagation path while a base station transmits or receives data to or from a terminal in a band of 6 GHz or greater, in particular, in a mmWave band. Problems caused by the limitation of coverage may be resolved by closely arranging a plurality of relays (or relaying nodes) on a propagation path between the base station and the terminal, but there may be a serious cost problem due to installation of an optical cable for backhaul connection between the relays. Accordingly, instead of installing the optical cable between the relays, broadband radio frequency resources available in mmWave bands may be used to transmit or receive backhaul data between the relays, thereby resolving the cost problem of installing the optical cable and efficiently using the mmWave band.

A technology for transmitting/receiving access data between a base station and a terminal by transmitting/receiving backhaul data with the base station by using available radio frequency resources of mmWave bands and transmitting/receiving the backhaul data with the terminal through at least one relaying node as described above may be referred to as integrated access and backhaul (IAB). Here, a relaying node that transmits/receives data to/from the base station by using wireless backhaul may be referred to as an IAB node. In this case, the base station may include a central unit (CU) and a distributed unit (DU), and the IAB node may include a DU and mobile termination (MT). The CU may control DUs of all IAB nodes connected to the base station through a multi-hop. According to various embodiments, the base station may be understood as being same as or similar to a gNB, an IAB donor, a donor IAB, or a donor base station.

The IAB node may use different frequency bands or a same frequency bands while receiving the backhaul data from the base station and transmitting the access data to the terminal, and receiving the access data from the terminal and transmitting the backhaul data to the base station. When the same frequency band is used, the IAB node may have an instantaneous uni-directional transmission/reception characteristics (half duplex constraint). In order to reduce transmission/reception delay caused by the half duplex constraint of the IAB node, a method of multiplexing (for example, frequency division multiplexing (FDM) and/or spatial division multiplexing (SDM)) the backhaul data (for example, if a parent IAB node, an IAB node operating as a relaying node, and a child node are connected through a wireless backhaul link, uplink data from MT of the IAB node to a DU of the parent IAB node and downlink data from a DU of the IAB node to MT of the child IAB node) and the access data to the terminal (downlink data from the IAB node to the terminal) may be used while the IAB node transmits. A relationship between the parent IAB node and the child IAB node for the IAB node may refer to 3GPP standard TS 38.300 section 4.7 Integrated Access and Backhaul. In the present disclosure, the parent IAB node may be briefly referred to as a parent node and the child IAB node may be briefly referred to as a child node. In other words, the parent node may be understood as being the same as or similar to the parent IAB node, and the child node may be understood as being the same as or similar to the child IAB node.

Also, the method of multiplexing (FDM and/or SDM) the backhaul data (the downlink data from the DU of the parent IAB node to the MT of the IAB node and the uplink data from the MT of the child IAB node to the DU of the IAB node) and the access data from the terminal (the uplink data from the terminal to the IAB node) may be used even when the IAB node receives.

When the MT of the IAB node (e.g., IAB #1) receives a signal from the DU of the parent IAB node, interference may occur in the signal received by the MT of the IAB node due to transmission from an access terminal or MT of another IAB node (e.g., IAB #2) to a DU of a donor base station or another parent IAB node. In the present disclosure, the interference may be referred to as MT-to-MT interference. Also, when the MT of the IAB node (IAB #1) receives the signal from the DU of the parent IAB node, interference may occur in the signal received by the MT of the IAB node due to transmission from the DU of the other parent IAB node to the access terminal or MT of the other IAB node. In the present disclosure, the interference may be referred to as DU-to-MT interference.

Also, when the DU of the IAB node (IAB #1) receives a signal from the access terminal or MT of the child IAB node, interference may occur in the signal received by the DU of the IAB node due to transmission from the DU of the other parent IAB node to the MT of the other IAB node. In the present disclosure, the interference may be referred to as DU-to-DU interference. Also, when the DU of the IAB node (IAB #1) receives the signal from the access terminal or MT of the child IAB node, interference may occur in the signal received by the DU of the IAB node due to transmission from the access terminal or MT of the other IAB node (IAB #2) to the DU of the donor base station or the other parent IAB node. In the present disclosure, the interference may be referred to as MT-to-DU interference.

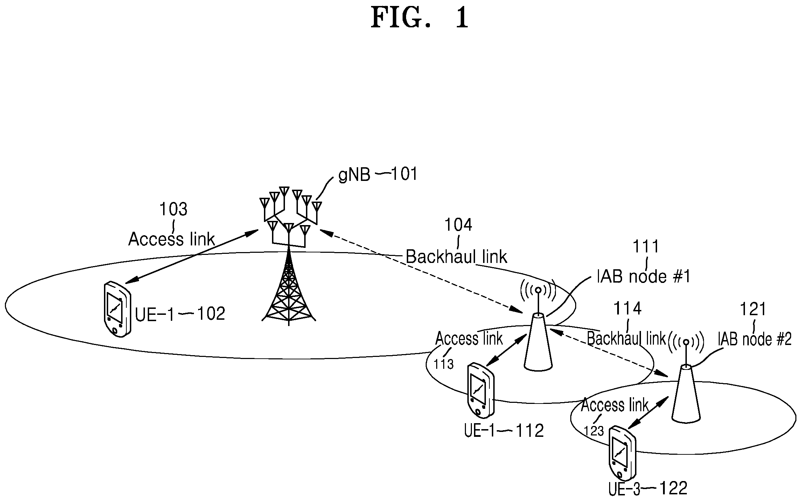

FIG. 1 is a diagram showing an example of a wireless communication system in which an IAB node is operated.

In FIG. 1, a gNB 101 denotes a base station, but is not limited thereto, and may be understood as being the same as or similar to one of an eNB, a base station, a donor base station, and a donor IAB. An IAB node #1 111 and an IAB node #2 121 are IAB nodes that transmit/receive backhaul data in mmWave bands. A first terminal (LTE 1) 102 may transmit/receive access data to/from the gNB 101 through an access link 103. The IAB node #1 111 may transmit/receive backhaul data to/from the gNB 101 through a backhaul link 104. A second terminal (LTE 2) 112 may transmit/receive access data to/from the IAB node #1 111 through an access link 113. The IAB node #2 121 may transmit/receive backhaul data to/from the IAB node #1 111 through a backhaul link 114. The IAB node #1 111 may be understood as a higher IAB node of the IAB node #2 121, and referred to as a parent IAB node. The IAB node #2 121 may be understood as a lower IAB node of the IAB node #1 111, and referred to as a child IAB node. A third terminal (LTE 3) 122 may transmit/receive access data to/from the IAB node #2 121 through an access link 123. In FIG. 1, the backhaul links 104 and 114 may use a wireless backhaul link.

Next, measurement of a terminal for an IAB node and a gNB will be described.

According to various embodiments, coordination between a gNB and IAB nodes may be required for a terminal (e.g., the second terminal 112 or the third terminal 122) to perform measurement on a gNB or neighboring IAB node, which is not a serving IAB node. The gNB may match measurement resources of IAB nodes having even hop orders or match measurement resources of IAB nodes having odd hop orders, and accordingly, waste of resources when the terminal performs measurement on the gNB or neighboring IAB node may be reduced. The terminal may receive, from a serving IAB node or base station through higher layer signaling (a higher layer signal), configuration information for measuring synchronization signal block (SSB)/physical broadcast channel (PBCH) or channel state information reference signal (CSI-RS), for measurement of the neighboring IAB node. When the terminal is configured to perform measurement on a neighboring base station through SSB/PBCH, the terminal may be configured with at least two SSB/PBCH measurement timing configurations (SMTCs) per frequency for the measurement resource of the IAB node having the even hop order or the measurement resource of the IAB node having the odd hop order. Upon receiving the configuration information, the terminal may perform measurement on the IAB node having the even hop order in one SMTC, and perform measurement on the IAB node having the odd hop order in the other SMTC.

Next, measurement of an IAB node or gNBs for another IAB node will be described.

Coordination between a gNB and IAB nodes may be required for one IAB node to perform measurement on the gNB or a neighboring IAB node. The gNB may match measurement resources of IAB nodes having even hop orders or match measurement resources of IAB nodes having odd hop orders, and accordingly, waste of resources when one IAB node performs measurement on the gNB or a neighboring IAB node may be reduced. One IAB node may receive, from a parent IAB node or a base station through higher layer signaling, configuration information for measuring SSB/PBCH or CSI-RS, for measurement of a neighboring IAB node. The parent IAB node may be referred to as a serving cell of the IAB node or a serving IAB node of the IAB node. When the IAB node is configured to perform measurement on a neighboring base station through SSB/PBCH (also referred to as an SSB), the IAB node may be configured with at least two SMTCs per frequency for the measurement resource of the IAB node having the even hop order or the measurement resource of the IAB node having the odd hop order. Upon receiving the configuration, the IAB node may perform measurement on the IAB node having the even hop order in one SMTC, and perform measurement on the IAB node having the odd hop order in the other SMTC.

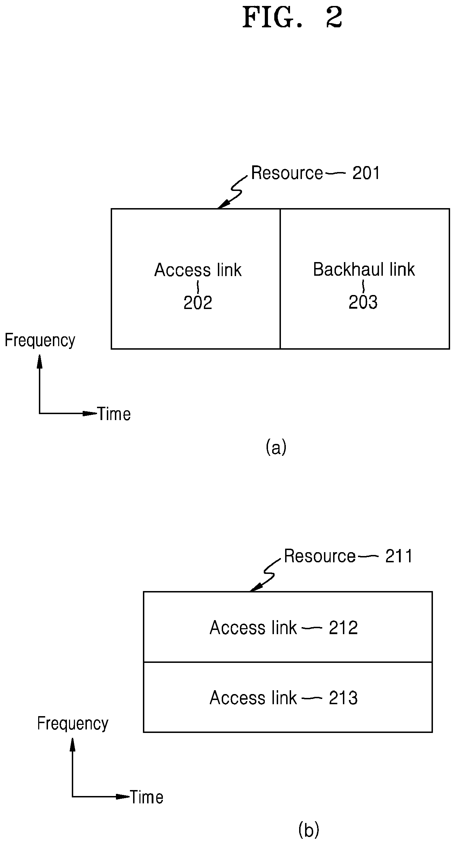

Next, a backhaul link between a base station and an IAB node or between IAB nodes, and an access link between the base station and a terminal or between an IAB node and the terminal being multiplexed in radio resources in an IAB technology proposed in the present disclosure will be described in detail with reference to FIGS. 2 through 4.

FIG. 2 is a diagram schematically showing an example in which resources are multiplexed between a backhaul link and an access link in an IAB node.

of FIG. 2 is a diagram showing an example in which resources are multiplexed in a time domain between a backhaul link and an access link in an IAB node. (b) of FIG. 2 is a diagram showing an example in which resources are multiplexed in a frequency domain between an access link and a backhaul link in an IAB node.

of FIG. 2 illustrates an example in which time domain multiplexing (TDM) is performed on a backhaul link 203 between a base station and an IAB node or between IAB nodes and an access link 202 between the base station and a terminal or between the IAB node and the terminal, in a radio resource 201. As shown in (a) of FIG. 2, when the resources are multiplexed in the time domain between the access link and the backhaul link in the IAB node, data is not transmitted/received between the base station and the IAB nodes in a time domain where the base station or the IAB node transmits/receives data to/from the terminal, and the base station or IAB node does not transmit/receive data to/from the terminal in a time domain where data is transmitted/received between the base station and the IAB nodes.

Next, (b) of FIG. 2 illustrates an example in which frequency domain multiplexing (FDM) is performed on a backhaul link 213 between a base station and an IAB node or between IAB nodes and an access link 212 between the base station and a terminal or between the IAB node and the terminal, in a radio resource 211. It is possible to transmit/receive the data between the base station and the IAB nodes in the time domain where the base station or IAB node transmit/receive data to/from the terminal, but only data transmission in a same direction is possible due to half duplex constraint of the IAB nodes. For example, it may be possible for a first IAB node to only receive backhaul data from another IAB node or the base station in a time domain where the first IAB node receives data from the terminal. Also, it may be possible for the first IAB node to only transmit backhaul data to another IAB node or the base station in a time domain where the first IAB node transmits data to the terminal.

Only TDM and FDM among multiplexing schemes have been described in the examples of FIG. 2, but spatial domain multiplexing (SDM) may also be possible between the access link and the backhaul link. In this case, it may be possible to transmit/receive the access link and the backhaul link at the same time through SDM, but as in FDM of (b) of FIG. 2, only data transmission in a same direction may be possible even in SDM due to the half duplex constraint of the IAB nodes. For example, it may be possible for the first IAB node to only receive the backhaul data from another IAB node or the base station in the time domain where the first IAB node receives the data from the terminal. Also, it may be possible for the first IAB node to only transmit the backhaul data to another IAB node or the base station in the time domain where the first IAB node transmits the data to the terminal.

Information about which one of multiplexing schemes from among TDM, FDM, and SDM is to be used may be transmitted to the base station or a higher IAB node when the IAB node initially accesses the base station or the higher IAB node. In other words, the IAB node may transmit capability information about the multiplexing scheme to the base station or the higher IAB node (for example, a parent IAB node). Alternatively, the IAB node may receive, from the base station or the higher IAB node, the information about which multiplexing scheme is to be used, through higher layer signaling information (higher layer signal), such as system information or radio resource control (RRC) information. Alternatively, the IAB node may receive the information about which multiplexing scheme is to be used, through the backhaul link from the base station or the higher IAB node after an initial access. Alternatively, the IAB node may determine which multiplexing scheme is to be used after the IAB node transmits the capability information to the base station or the higher IAB node. In this case, the IAB node may report which multiplexing scheme is to be used during a specific slot, a specific radio frame, or a specific interval, to the base station or the higher IAB nodes through backhaul or higher layer signaling information, and continuously and repeatedly report the same thereafter.

In the example of FIG. 2, the multiplexing scheme between the access link and the backhaul link has been mainly described, but multiplexing between the backhaul links may use a same scheme as multiplexing between the access link and the backhaul link. For example, multiplexing of a backhaul link of MT, and a backhaul link or access link of a DU in one IAB node, which will be described below, may be possible through the scheme described in the examples of FIG. 2.

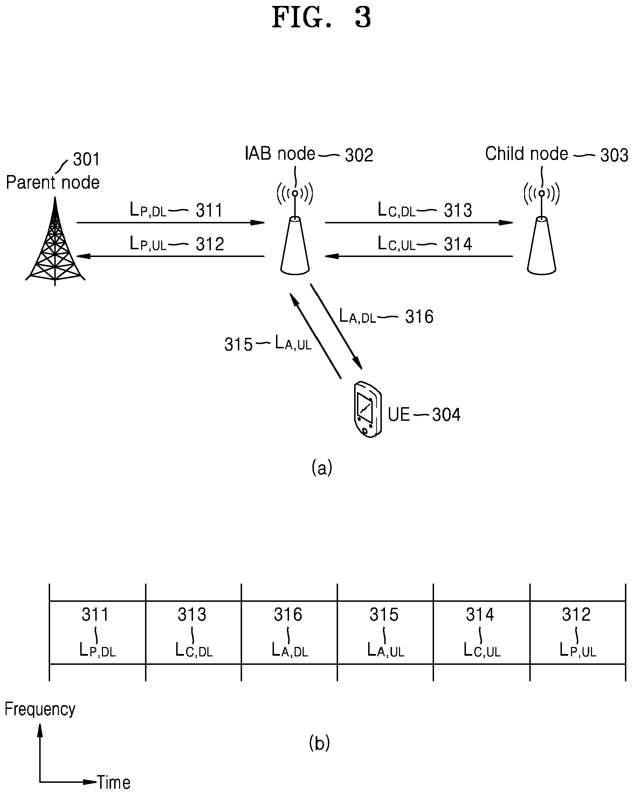

Next, FIG. 3 is a diagram showing an example in which resources are multiplexed in a time domain between a backhaul link and an access link in an IAB node.

FIG. 3 illustrates process by which an IAB node 302 communicates with a parent node 301, a child node 303, and a terminal 304. Describing a link between nodes in detail, the parent node 301 may transmit a backhaul downlink signal to the IAB node 302 in a backhaul downlink L_{P,DL} 311, and the IAB node 302 may transmit a backhaul uplink signal to the parent node 301 in a backhaul uplink L_{P,UL} 312. The IAB node 302 may transmit an access downlink signal to the terminal 304 in an access downlink L_{A,DL} 316, and the terminal 304 may transmit an access uplink signal to the IAB node 302 in an access uplink L_{A,UL} 315. The IAB node 302 may transmit a backhaul downlink signal to the child node 303 in a backhaul downlink L_{C,DL} 313, and the child node 303 may transmit a backhaul uplink signal to the IAB node 302 in a backhaul uplink L_{C,UL} 314. In FIG. 3, a subscript P denotes a backhaul link with a parent node, a subscript A denotes an access link with a terminal, and a subscript C denotes a backhaul link with a child node.

A link relationship in FIG. 3 has been described based on the IAB node 302, and in a point of view of the child node 303, a parent node is the IAB node 302, and there may be another child node that is not illustrated below the child node 303. Also, in a point of view of the parent node 301, a child node is the IAB node 302 and there may be another parent node that is not illustrated above the parent node 301.

The backhaul uplink/downlink signal and the access uplink/downlink signal may include at least one of data and control information, a channel for transmitting the data and control information, or a reference signal required to decode the data and control information or reference signals for determining channel information.

FIG. 3 illustrates an example in which the links are all multiplexed in a time domain. In the example of FIG. 3, the backhaul downlink L_{P,DL} 311, the backhaul downlink L_{C,DL} 313, the access downlink L_{A,DL} 316, the access uplink L_{A,UL} 315, the backhaul uplink L_{C,UL} 314, and the backhaul uplink L_{P,UL} 312 are multiplexed in a time order. However, an order of the links is not limited thereto, and the multiplexing may be performed in another order.

Because the links are multiplexed in the time domain in the time order, a signal may be transmitted from the parent node 301 to the child node 303 through the IAB node 302, and an entire time for transmitting the signal to the terminal may be longer than another multiplexing scheme. In order to reduce latency when finally transmitting the signal from the parent node 301 to the terminal, a method of simultaneous transmission by multiplexing at least some of the backhaul links or at least some of the backhaul link and the access link in a frequency domain or a spatial domain may be considered.

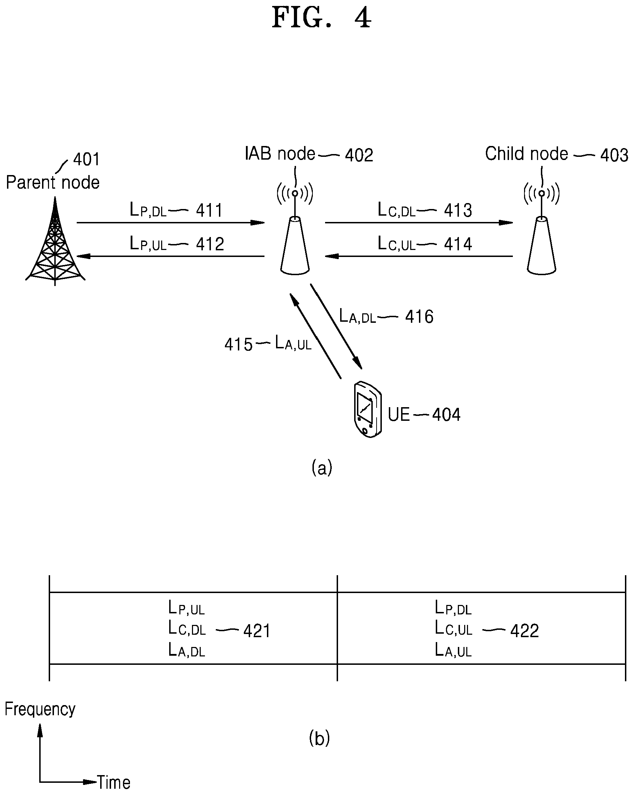

FIG. 4 is a diagram showing an example in which resources are multiplexed in a frequency domain or spatial domain between a backhaul link and an access link in an IAB node.

A method of multiplexing at least some of the backhaul links or at least some of the backhaul link and the access link in the frequency domain or in the spatial domain to reduce latency will be described with reference to FIG. 4.

First, similarly to FIG. 3, (a) of FIG. 4 illustrates a process by which an IAB node 402 communicates with a parent node 401, a child node 403, and a terminal 404. Describing a link between nodes in detail, the parent node 401 may transmit a backhaul downlink signal to the IAB node 402 in a backhaul downlink L_{P,DL} 411, and the IAB node 402 may transmit a backhaul uplink signal to the parent node 401 in a backhaul uplink L_{P,UL} 412. The IAB node 402 may transmit an access downlink signal to the terminal 404 in an access downlink L_{A,DL} 416, and the terminal 404 may transmit an access uplink signal to the IAB node 402 in an access uplink L_{A,UL} 415. The IAB node 402 may transmit a backhaul downlink signal to the child node 403 in a backhaul downlink L_{C,DL} 413, and the child node 403 may transmit a backhaul uplink signal to the IAB node 402 in a backhaul uplink L_{C,UL} 414. In FIG. 4, a subscript P denotes a backhaul link with a parent node, a subscript A denotes an access link with a terminal, and a subscript C denotes a backhaul link with a child node.

A link relationship in FIG. 4 has been described based on the IAB node 3402, and in a point of view of the child node 403, a parent node is the IAB node 402, and there may be another child node that is not illustrated below the child node 403. Also, in a point of view of the parent node 401, a child node is the IAB node 402 and there may be another parent node that is not illustrated above the parent node 401.

The backhaul uplink/downlink signal and the access uplink/downlink signal may include at least one of data and control information, a channel for transmitting the data and control information, or a reference signal required to decode the data and control information or reference signals for determining channel information.

Next, (b) of FIG. 4 illustrates an example of multiplexing in a frequency domain or spatial domain.

As described above, because an IAB node has instantaneous half duplex constraint, signals that may be multiplexed in the frequency domain or the spatial domain may be limited. For example, considering half duplex constraint of the IAB node 402, links that may be multiplexed in a time domain and capable of being transmitted by the IAB node 402 of FIG. 4 may be limited to the backhaul uplink L_{P,UL} 412, the backhaul downlink L_{C,DL} 413, and the access downlink L_{A,DL} 416. Accordingly, when the links are multiplexed in the frequency domain or the spatial domain, the IAB node 402 may simultaneously transmit the backhaul uplink L_{P,UL} 412, the backhaul downlink L_{C,DL} 413, and the access downlink L_{A,DL} 416 as indicated by a reference numeral 421. Also, links that may be multiplexed in the time domain and capable of being received by the IAB node 402 may be limited to the backhaul downlink L_{P,DL} 411, the backhaul uplink L_{C,UL} 414, and the access uplink L_{A,UL} 415. Accordingly, when the links are multiplexed in the frequency domain or the spatial domain, the IAB node 402 may simultaneously receive the backhaul downlink L_{P,DL} 411, the backhaul uplink L_{C,UL} 414, and the access uplink L_{A,UL} 415 as indicated by a reference numeral 422.

The multiplexing of the links provided in the embodiment of FIG. 4 is only an example, and types and number of multiplexed links are not limited to those shown in FIG. 4. It is obvious that only two of the three links multiplexed in the frequency or spatial domain may be multiplexed. In other words, the IAB node 402 may transmit or receive a signal by multiplexing only some of multiplexable links.

Next, a structure of an IAB node will be described.

Various types of structures of a base station optimal to service requirements are being studied in order to reduce communication network capital expenditures (CAPEX) and support various services, such as large capacity transmission, and low latency high reliability or massive IoT devices, in a 5G system. In a 4G LTE system, in order to reduce CAPEX and effectively process interference control, a cloud radio access network (C-RAN) structure, in which a data processor and a wireless transceiver (remote radio head (RRH)) of a base station are separated to process the data processor at the center and place the wireless transceiver in a cell site, has been commercialized. In the C-RAN structure, an optical link of common public radio interface (CPRI) standards is generally used to transmit baseband digital in-phase quadrature (IQ) data from the data processor to the wireless transceiver of the base station. A large data capacity is required when data is transmitted to the wireless transceiver. For example, a transmission rate of 614.4 Mbps is required when internet protocol (IP) data of 10 MHz is transmitted, and a transmission rate of 1.2 Gbps is required when IP data of 20 MHz is transmitted. Accordingly, in a 5G RAN structure, a base station is designed to have various structures by separating the base station into a central unit (CU) and a distributed unit (DU) and applying a functional split to the CU and the DU, in order to reduce massive loads of an optical link. In 3GPP, various functional split options between the CU and the DU are being standardized, and there are total 8 options from Option 1 to Option 7 for the functional split by splitting according to functions between protocol layers or within a protocol layer. Thereamong, structures first considered in a current 5G base station structure are Option 2 and Option 7. In Option 2, an RRC layer and a packet data convergence protocol (PDCP) layer are located in the CU, and a radio link control (RLC) layer, a medium access control (MAC) layer, a physical (PHY) layer, and a radio frequency (RF) layer are located in the DU. In Option 7, RRC, PDCP, RLC, MAC, and higher PHY layers are located in the CU and a lower PHY layer is located in the DU. Through such a functional split, it is possible to realize a structure having arrangement flexibility of separating and transferring NR network protocols between the CU and the DU. Accordingly, a solution having high cost efficiency may be provided by implementing flexible hardware, and load management and adjustments on real-time performance optimization may be possible through a split structure between the CU and the DU. In addition, network functions virtualization (NFV)/software defined network (SDN) is possible, and the configurable functional split may be applied to various application examples (variable latency on transmission).

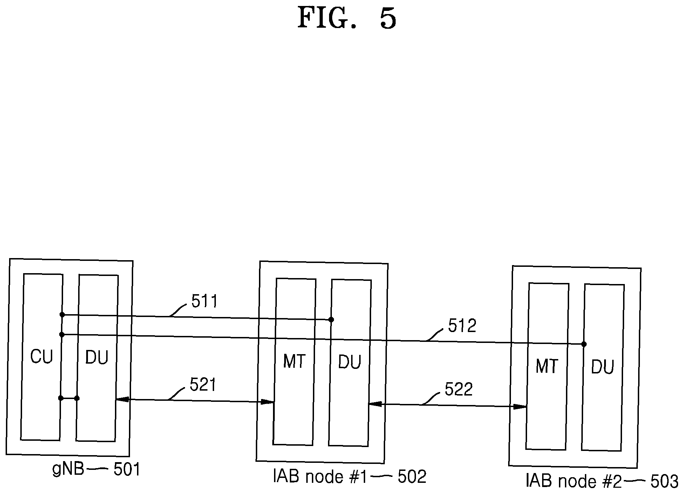

A structure of an IAB node considering such a functional split will be described with reference to FIG. 5. FIG. 5 is a diagram schematically showing a structure of an IAB node.

In FIG. 5, a gNB 501 includes a CU and a DU, and IAB nodes include MT configured to perform a terminal function for transmitting/receiving data with a parent node in a backhaul link, and a DU configured to perform a base station function for transmitting/receiving data with a child node in a backhaul link. The terminal function of the IAB node, i.e., the MT of the IAB node, may basically follow an NR standard procedure applicable for an access terminal. For example, the NR standard procedures related to an initial and random access procedure and a configuration and instruction procedure for data transmission/reception, followed by the access terminal, may be applied to the MT. The MT of the IAB node may access a DU (i.e., a serving cell corresponding to the DU) of a parent node according to the standard procedure, receive a configuration and instruction from the DU of the parent node and a CU of the base station, and transmit/receive data by transmitting a related message.

In FIG. 5, an IAB node #1 502 is wirelessly connected to the gNB 501 in 1 hop, and an IAB node #2 503 is wirelessly connected to the gNB 501 in 2 hops through the IAB node #1 502.

As shown in FIG. 5, the CU of the gNB 501 may control not only the DU of the gNB 501, but also DUs of all IAB nodes, i.e., the IAB node #1 502 and the IAB node #2 503, wirelessly connected to the gNB 501 (operations 511 and 512). The CU of the gNB 501 may assign radio resources to the DU such that the DU may transmit/receive data with MT of a lower IAB node. The radio resources may be allocated by being transmitted to the DU through a physical layer signal or a higher layer signal, such as system information or RRC information, by using an interface of F1 application protocol (F1AP). The F1AP may refer to 3GPP TS 38.473 standards. Here, the radio resources may include downlink time resources, uplink time resources, or flexible time resources.

Hereinafter, configuration of the radio resources will be described in detail based on the IAB node #2 503. The downlink time resources are resources for transmitting downlink control/data and signal from the DU of the IAB node #2 503 to MT of a lower IAB node. The uplink time resources are resources for receiving uplink control/data and signal by the DU of the IAB node #2 503 from the MT of the lower IAB node. The flexible time resources are resources that may be used by the DU as the downlink time resources or the uplink time resources, and a downlink control signal of the DU may indicate how to use the flexible time resources to the MT of the lower IAB node. Upon receiving the downlink control signal, the MT of the lower IAB node may determine whether to use the flexible time resources as the downlink time resources or as the uplink time resources. When the downlink control signal is not received, the MT of the lower IAB node does not perform a transmitting/receiving operation. In other words, the MT may not monitor a downlink control channel in the resources or may not measure a signal in the resources. The MT does not perform the transmitting/receiving operation in the resources. In other words, the MT may not monitor the downlink control channel in the resources or may not measure the signal in the resources. Two different types (or three different types including NA time resources) may be indicated from the CU to the DU, for the downlink time resources, the uplink time resources, and the flexible time resources.

A first type is a soft type, and the CU of the gNB 501 may configure the DU of the IAB node #2 503 with soft type downlink time resources, uplink time resources, or flexible time resources, by using the F1AP (an interface between the CU and the DU). Here, the IAB node #1 502 that is a parent node of the IAB node #2 503 may explicitly (e.g., by a downlink control indicator (DCI) format) or implicitly indicate the IAB node #2 503 that is a child node whether the resources are available or not available, for the configured soft type resources. When it is indicated that specific resources are available, the IAB node #2 503, for example, the DU of the IAB node #2 503, may use the specific resources for data transmission/reception with the MT of the lower IAB node. In other words, the DU of the IAB node #2 503 may perform transmission when the resources are downlink resources or perform reception with the resources are uplink resources, by using the resources. When it is indicated that the specific resources are not available, the IAB node #2 503 is unable to use the resources for the data transmission/reception with the MT of the lower IAB node. In other words, the DU of the IAB node #2 503 may be unable to transmit or receive using the resources.

A method wherein availability of the soft type resources is indicated by a DCI format will now be described in detail. The DCI format according to an embodiment may include availability indicator for indicating availability of one or more consecutive uplink, downlink, or flexible symbols.

In order to receive the DCI format, the IAB node #2 503 may receive, in advance by a higher layer signal from the CU or parent node, together with a cell ID of the DU of the IAB node #2 503, at least one piece of information from among position information of the availability indicator indicating availability of the IAB node #2 in the DCI format, a table indicating availability for time resources corresponding to a plurality of slots, and a mapping relationship of the availability indicator. A value (or an indicator) indicating availability of consecutive uplink symbols, downlink symbols, or flexible symbols in one slot and a meaning of the value (or the indicator) may be as Table 1 below.

**[Table 1]**

| Value | Indication |
|---|---|
| 0 | No indication of availability for soft symbols |
| 1 | DL soft symbols are indicated available |
| | No indication of availability for UL and Flexible soft symbols |
| 2 | UL soft symbols are indicated available |
| | No indication of availability for DL and Flexible soft symbols |
| 3 | DL and UL soft symbols are indicated available |
| | No indication of availability for Flexible soft symbols |
| 4 | Flexible soft symbols are indicated available |
| | No indication of availability for DL and UL soft symbols |
| 5 | DL and Flexible soft symbols are indicated available |
| | No indication of availability for UL soft symbols |
| 6 | UL and Flexible soft symbols are indicated available |
| | No indication of availability for DL soft symbols |
| 7 | DL, UL, and Flexible soft symbols are indicated available |

When such an availability indicator is indicated from the parent node to the IAB node #2 503 by the DCI format and the IAB node #2 503 receives the indication, a following method may be considered as a method by which the DU of the IAB node #2 503 interprets a relationship between the availability and the downlink, uplink, or flexible time resources configured from the CU.

A first method is a method wherein the DU of the IAB node #2 503 anticipates that the number of values indicating availability included in an availability indicator included in the DCI format is the same as the number of slots including a soft type configured with consecutive symbols configured by the CU. According to such a method, the IAB DU may determine that the availability is applied only to the slot including the soft type.

A second method is a method wherein the DU of the IAB node #2 503 anticipates that the number of values indicating the availability included in the availability indicator included in the DCI format is the same as the number of all slots configured by the CU, i.e., the number of all slots including the soft type, a hard type, or a non-available (NA) type. Meanwhile, according to such an embodiment, the DU of the IAB node #2 503 may determine that the availability is applied only to a slot including the soft type, and determine that the indicated availability is not applied to a slot including only the hard type or NA type without the soft type.

In the first and second methods, the DU of the IAB node #2 503 may anticipate that the meaning of the value indicating the availability matches the downlink resources, uplink resources or flexible resources configured by the CU. For example, when only downlink soft resources or downlink hard resources are present in a slot, the DU of the IAB node #2 503 may anticipate that only a value of 1 may be indicated in Table 1. Accordingly, the DU of the IAB node #2 503 may anticipate that values including availability of uplink soft resources are not indicated from among the values in Table 1.

Also, the DU of the IAB node #2 503 may determine that it is possible to indicate, in the flexible resources configured at least by the CU, whether downlink resources are available or uplink resources are available, in addition to a value indicating that the flexible resources are available. For example, for flexible soft resources or flexible hard resources, the DU of the IAB node #2 503 may anticipate that it is possible to indicate a value of 1 or 2 instead of a value of 4 in Table 1. In this case, the DU of the IAB node #2 503 may determine that it is possible to use the flexible resources only in uplink or downlink according to an indication of a parent node, instead of using the flexible resources in the uplink or downlink according to determination of the IAB node #2 503.

Also, the DU of the IAB node #2 503 may anticipate that a value of 0 may be indicated in Table 1 even in any soft, hard, or NA resources configured by the CU. In this case, the DU of the IAB node #2 503 may determine that resources are not available for existing soft resources or hard resources configured by the CU. Also, the DU of the IAB node #2 503 may consider that the resources are unable to be used by the DU of the IAB node #2 503 for data transmission/reception with MT of a lower IAB node, as in a case of an NA resource type configured by the CU, unless the resources are indicated to be available by the DCI format afterwards. Then, when the resources are indicated to be available again by the DCI format, the DU of the IAB node #2 503 may use the resources as configured by the CU and received by the DCI format.

A second type is a hard type and the resources are always used between the DU and the MT. In other words, the DU of the IAB node #2 503 may perform transmission when the resources are downlink time resources and perform reception when the resources are uplink resources, regardless of a transmitting/receiving operation of the MT of the IAB node #2 503. When the resources are flexible resources, transmission or reception may be performed according to determination of the DU of the IAB node #2 503 (i.e., to match the DCI format indicating the MT of the lower IAB node whether the flexible resources are downlink resources or uplink resources).

A third type is a not used or NA type, and the resources are not be used by the DU of the IAB node #2 503 for data transmission/reception with the MT.

The types are received together when the downlink time resources, the uplink time resources, the flexible time resources, or reserved time resources are received from the CU to the DU through a higher signal.

Referring to FIG. 5, the DU of the gNB 501 performs general base station operations, and the DU may schedule transmission/reception of data by controlling the MT of the IAB node #1 502 (operation 521). The DU of the IAB node #1 502 performs general base station operations, and the DU may schedule transmission/reception of data by controlling the MT of the IAB node #2 503 (operation 522).

The DU may indicate radio resources to transmit/receive data with the MT of the lower IAB node, based on the radio resources assigned from the CU. Configuration of the radio resources may be transmitted to the MT through system information, a higher layer signal, or a physical layer signal. Here, the radio resources may include downlink time resources, uplink time resources, flexible time resources, or reserved time resources. The downlink time resources are resources for transmitting a downlink control/data signal from the DU to the MT of the lower IAB node. The uplink time resources are resources for receiving an uplink control/data signal by the DU from the MT of the lower IAB node. The flexible time resources are resources that may be used by the DU as the downlink time resources or the uplink time resources, and a downlink control signal of the DU may indicate how to use the flexible time resources to the MT of the lower IAB node. Upon receiving the downlink control signal, the MT may determine whether to use the flexible time resources as the downlink time resources or as the uplink time resources. When the downlink control signal is not received, the MT may not perform the transmitting/receiving operation. In other words, the MT may not monitor or decode the downlink control channel in the resources or may not measure the signal in the resources.

The downlink control signal may be signaled to the MT in a combination of the higher layer signal and the physical layer signal, and the MT may receive the signaling and determine a slot format in a specific slot. The slot format may be basically configured to start with a downlink symbol and end with an uplink symbol, with a flexible symbol in the middle. The configuration of the slot format may be understood as, for example, a structure having an order of D-F-U. When only the slot format is used, the DU of the IAB node may perform downlink transmission from a start of a slot, but because the MT of the IAB node is configured with the slot format (i.e., the D-F-U structure) by a parent node, it may be difficult to simultaneously perform uplink transmission. Such content is displayed in slot format indexes 0 to 55 in Tables 2 to 5. A slot format configured to start with an uplink symbol and end with a downlink symbol with a flexible symbol in the middle may be considered. Such content is displayed in slot format indexes 56 to 96 in Tables 2 to 5. Slot formats shown in Tables 2 to 5 may be transmitted to the MT by using the downlink control signal, and may be configured in the DU from the CU by using F1AP.

**[Table 2]**

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |

**[Table 3]**

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | U | D | D | U | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |

**[Table 4]**

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 | U | U | U | U | U | U | U | U | U | U | U | U | U | F |
| 57 | U | U | U | U | U | U | U | U | U | U | U | U | F | F |
| 58 | U | U | U | U | U | U | U | U | U | U | U | F | F | F |
| 59 | U | U | U | U | U | U | U | U | U | U | F | F | F | F |
| 60 | U | U | U | U | U | U | U | U | U | F | F | F | F | F |
| 61 | U | U | U | U | U | U | U | U | F | F | F | F | F | F |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | F | D | D |
| 74 | U | U | U | F | F | F | F | F | F | F | F | F | D | D |

**[Table 5]**

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 75 | U | F | F | F | F | F | F | F | F | F | F | D | D | D |
| 76 | U | U | F | F | F | F | F | F | F | F | F | D | D | D |
| 77 | U | U | U | F | F | F | F | F | F | F | F | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | Γ | D | D | D | D | D | D | D | D | D | D |
| 91 | U | U | F | F | F | D | D | D | D | D | D | D | D | D |
| 92 | U | U | U | F | F | F | D | D | D | D | D | D | D | D |
| 93 | U | U | U | U | U | U | U | U | U | F | F | F | F | D |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

The reserved time resources are resources in which the DU is unable to transmit/receive data with the lower MT, and the MT does not perform a transmitting/receiving operation in the resources. In other words, the MT may not monitor or decode the downlink control channel in the resources or may not measure the signal in the resources.

MT in one IAB node may be controlled by DUs in higher IAB nodes and transmit/receive data by receiving scheduling, and the DUs in the IAB nodes may be controlled by the CU of the gNB 501. In other words, the MT and DU in one IAB may be controlled by different entities and may be difficult to be coordinated in real time.

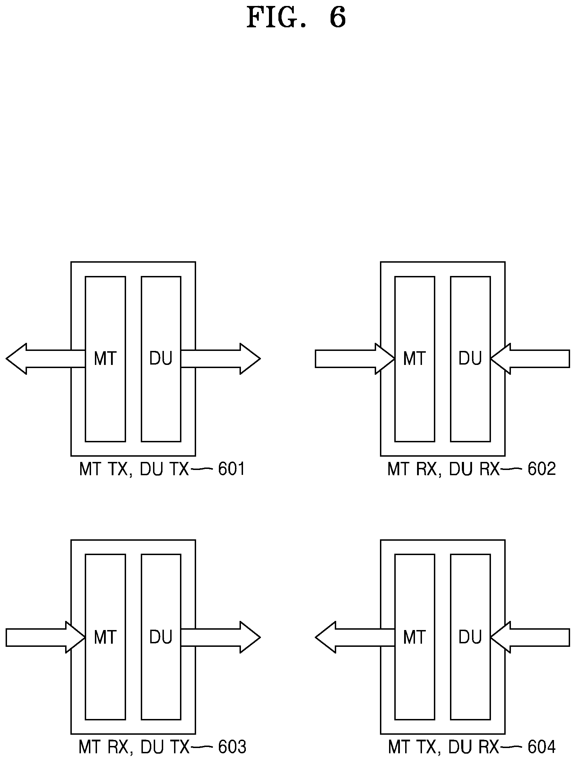

FIG. 6 is a diagram for describing a communication method for simultaneous transmission/reception between MT and a DU in an IAB node, in a wireless communication system according to an embodiment of the present disclosure. In descriptions of FIG. 6, the simultaneous transmission/reception between the MT and the DU in the IAB node may denote that the MT transmits or receives and the DU transmits or receives according to the multiplexing scheme described in FIG. 2, at the same time.

Referring to FIG. 6, a first embodiment 601 illustrates MT and DU both transmitting respective signals in one IAB node. The signal transmitted by the MT of the IAB node in the first embodiment 601 may be received by a DU of a parent node or base station through a backhaul uplink, as described in FIGS. 3 to 5. Also, at the same time, the signal transmitted by the DU of the IAB node in the first embodiment 601 may be received by MT of a child node through a backhaul downlink or by an access terminal through an access downlink, as described in FIGS. 3 to 5.

A second embodiment 602 illustrates MT and DU both receiving respective signals in one IAB node. The signal received by the MT of the IAB node in the second embodiment 602 may be a signal transmitted from a DU of a parent node or base station through a backhaul downlink, as described in FIGS. 3 to 5. Also, at the same time, the signal received by the DU of the IAB node in the second embodiment 602 may be a signal transmitted by MT of a child node through a backhaul uplink or by an access terminal through an access uplink, as described in FIGS. 3 to 5.

A third embodiment 603 illustrates MT and DU both receiving or transmitting respective signals in an IAB node. In other words, in the third embodiment 603, the MT in the IAB node may receive its signal and at the same time, the DU in the IAB node may transmit its signal. The signal received by the MT of the IAB node in the third embodiment 603 may be a signal transmitted from a DU of a parent node or base station through a backhaul downlink, as described in FIGS. 3 to 5. Also, at the same time, the signal transmitted by the DU of the IAB node in the third embodiment 603 may be received by MT of a child node through a backhaul downlink or by an access terminal through an access downlink, as described in FIGS. 3 to 5.

A fourth embodiment 604 illustrates MT and DU both transmitting or receiving respective signals in an IAB node. In other words, in the fourth embodiment 604, the MT in the IAB node may transmit its signal and at the same time, the DU in the IAB node may receive its signal. The signal transmitted by the MT of the IAB node in the fourth embodiment 604 may be received by a DU of a parent node or base station through a backhaul uplink, as described in FIGS. 3 to 5. Also, at the same time, the signal received by the DU of the IAB node in the fourth embodiment 604 may be a signal transmitted by MT of a child node through a backhaul uplink or by an access terminal through an access uplink, as described in FIGS. 3 to 5.

Next, an operation by which an access terminal transmits a sounding reference signal (SRS) in NR will be described. As described above, MT of an IAB node may basically follow a standard procedure applicable for the access terminal. Accordingly, unless stated otherwise, operations of the access terminal in drawings described in or embodiments proposed in the present disclosure may be identically or similarly applied to the MT of the IAB node, and operations of a base station may be considered as operations of a parent node or donor base station.

Unlike LTE that is operated in a band of 6 GHz or less, an operating scenario of NR may expand to a high-frequency band up to 100 GHz. Channel attenuation may exponentially increase according to a frequency band, and thus technologies for overcoming the same may be required in the high-frequency band.

Beamforming is a representative technology for efficiently overcoming attenuation in a high-frequency band without having to largely increase the number of base stations of an NR system compared to an existing technology (LTE/LTE-A). For example, when the NR system of 4 to 6 GHz bands supports up to 4 multi-beams in order to secure coverage similar to the LTE/LTE-A system of 2 to 2.5 GHz bands, about 3dB coverage expansion may be obtained. In addition, an interval between antennas required for the beamforming is proportional to a carrier wavelength, and thus when the frequency band increases, an antenna array factor may greatly improve. Accordingly, when the band of the NR system is 6 GHz or greater, coverage expansion of tens to hundreds times greater may be obtained by using tens to hundreds of antenna elements. However, when existing channel estimation and report, and an existing transmission mechanism are applied to such a large number of antenna elements, complexity of a terminal or base station and a channel report burden may unrealistically increase.

In this regard, the NR system considers a hybrid beamforming structure.

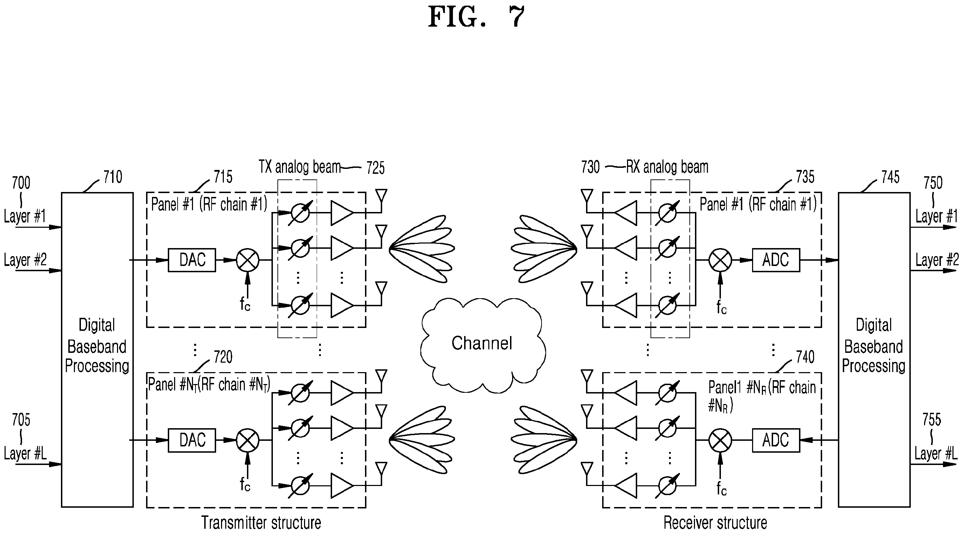

FIG. 7 is a diagram showing transmitter and receiver structures supporting hybrid beamforming that may be used in an NR system.

Referring to a left drawing including the transmitter structure in FIG. 7, information on L MIMO layers from a first layer (layer #1) 700 to an L^{th} layer (layer #L) 705 may be distributed from a transmitter, for example, a base station (gNB), to N_{T} panels (or RF chains) from a first panel (panel #1 or RF chain #1) 715 to an N_{T}^{th} panel (panel #N_{T} or RF chain #N_{T}) 720 through N_{T} × L-dimensional digital precoding (for example, digital baseband processing 710). The digital precoding may be performed in a baseband. Then, signals distributed to the panels 715 and 720 may be converted into analog signals through a digital-to-analog converter (DAC) and up-converted into a carrier frequency band f_{c}. Then, the up-converted signals may be formed as transmission beam(s) in a specific direction through a transmission (TX) analog beamforming unit 725, and then transmitted through antenna elements. Here, in a point of view of a terminal, the antenna elements of the panels 715 and 720 may be virtualized by transmission analog beams and viewed as one antenna port, and the terminal may not perform channel estimation on individual antenna elements.

Referring to a right drawing including the receiver structure in FIG. 7, a receiver, for example, a terminal, may receive a wireless signal of a plurality of reception beams by using N_{R} panels (or RF chains) 735 to 740 each including a plurality of antenna elements. Here, a reception beam in a specific direction may be applied to the wireless signal received through the antenna elements of each of the panels 735 to 740, through a reception (RX) analog beamforming unit 730. A received signal after reception beamforming may be down-converted into a baseband, and then converted into a digital signal through an analog-to-digital converter (ADC). The digital signal is distributed into information of L MIMO layers from a first layer (layer #1) 750 to an L^{th} layer (layer #L) 755, through an L × N_{R}-dimensional digital equalizer (for example, digital baseband processing 745).

In such a hybrid beamforming system, when the number of antenna elements for each transmission panel is KT and the number of antenna elements for each reception panel is KR, channel estimation complexity is reduced by 1/(KTKR) times compared to a full digital precoding system.

The reduction of the channel estimation complexity of the hybrid beamforming system is a result obtained when adequate transmission beams or reception beams are applied by the transmission panel or reception panel. Accordingly, a technique for a transmitter or receiver to obtain information about the adequate transmission/reception beams or transmission/reception beam directions is required in an actual environment.

In downlink, it is possible to determine the transmission/reception beam directions according to following procedures.

First, a base station determines transmission beam direction candidates, and transmits, to a terminal, a plurality of SSBs or CSI-RSs in a CSI-RS resource, through the transmission beam direction candidates. The base station may receive, from the terminal, a report on information about a preferred SSB or a preferred CSI-RS resource index, and obtain information about a transmission beam direction preferred by the terminal. Here, the base station may not explicitly notify the terminal of direction information of the transmission beam candidates. Next, the terminal may receive downlink signals by applying different reception beams to resources to which a same transmission beam is applied, and determine the preferred transmission beam direction by comparing reception qualities of the reception beams. The terminal may report the preferred reception beam direction and the preferred transmission beam direction for downlink to the base station, and the base station may schedule downlink and perform transmission by referring to the referred reception and transmission beam directions reported by the terminal.

Here, the determining of the preferred reception beam direction and quality of the paired transmission beam direction or reception downlink data may be affected by interference occurred from a terminal (or another IAB node) of a same cell or different cells. As described above in the beginning of the present disclosure, the interference may be MT-to-MT interference, Du-to-MT interference, DU-to-DU interference, or MT-to-DU interference. Accordingly, the present disclosure proposes a method by which the terminal (or MT of an IAB node) that receives the downlink data measures interference with respect to a specific reception beam direction and reports a result of the measurement to the base station (or a donor base station or a parent node).

In uplink, it is difficult for the terminal to determine an entire network situation, and thus when the terminal arbitrarily determines an uplink beam direction, cell transmission capacity may be adversely affected. Accordingly, the base station may instruct the terminal about information about a beam direction, precoding information, or information about an analog beam to be used when transmitting an uplink channel, such as a physical random access channel (PRACH) or a reference signal, such as an SRS.

In uplink, RACH, SRS, or uplink (UL) demodulated reference signal (DMRS) may be considered as an uplink beam training signal used to determine the uplink beam direction. Thereamong, the RACH and the UL DMRS do not have periodicity. The base station may use a measurement result of the SRS to detect the preferred uplink beam direction.

An NR system is able to use additional information fields, such as activation/deactivation signaling for an SRS resource, in addition to SRS configuration information, and may support periodic, semi-persistent, and aperiodic SRS transmission. Some information fields of the SRS configuration information may be omitted according to a transmission type (for example, periodic, semi-persistent, or aperiodic SRS transmission) of the SRS.

Also, in the NR system, cell-specific SRS configuration is not applied, but LTE-specific SRS configuration may be provided in order to provide flexibility.

For the periodic SRS transmission to which the LTE-specific SRS configuration is applied, for example, a slot offset and an SRS period in slot units, which are determined according to a higher layer parameter providable through an RRC configuration, may be used for each terminal. In other words, in the NR system, a slot-based SRS time resource may be configured instead of an SRS subframe.

The SRS transmission is configured based on a slot because subcarrier spacing (SCS) of a data channel support various numerologies in the NR system. For example, in the NR system, the SCS of the data channel may be 15 kHz, 30 kHz, 60 kHz, or 120 kHz. Accordingly, by using a slot-based SRS period, the base station may use scalable SRS period according to data numerology. Also, another feature of the slot-based SRS period configuration is that SRS transmission is distinguishable in each symbol.

In other words, the SRS period in slot units is applied in NR, instead of distinguishing one or two symbols in an uplink pilot time slot (UpPTS) in subframe units as in LTE. Accordingly, the NR system may assign one, two, or four symbols for the SRS transmission in one slot, and the SRS period in a slot level may be assigned regardless of the number of symbols. Also, unlike LTE, the NR may additionally support an SRS period of 640 slots so as to support a wider period.

In the NR system, for the periodic SRS transmission, a same SRS configuration table may be assigned for time division duplexing (TDD) and frequency division duplexing (FDD), for each terminal. The SRS configuration table for FDD and TDD may include columns indicating SRS periods and slot offsets. In the NR system, 0.5/1/2/5/10 ms are supported as LTL/DL configuration switching periods, and 15/30/60/120 kHz are supported as SCS of the data channel. Accordingly, an SRS period that is a multiple of 1/2/4/8/16 slots may be additionally configured, considering the number of slots that may be assigned within the UL/DL configuration switching periods.

In the NR system, the terminal may receive, through higher layer signaling, one or more SRS resource sets. Each SRS resource set includes one or more SRS resources, and the maximum number K thereof may be determined according to UE capability. A usage of the SRS resource set may be configured as beam management, codebook, non-codebook, or antenna switching, and the SRS resource set may be configured according to the configured usage. For example, when the SRS usage is configured as the antenna switching, one SRS resource set may be configured for each of a plurality of SRS resource sets, and the number of SRS resources included in the SRS resource set may vary depending on an antenna switching method. SRS resources in different SRS resource sets having a same time domain operation within a same bandwidth part (BWP) may be simultaneously used.

In the aperiodic SRS, at least one information field within a DCI field may be used to select at least one of the SRS resource sets.

SRS parameters configured semi-statically by higher layer signaling are shown below.
- srs-ResourceId: Indicates an SRS resource configuration identity.
- nrofSRS-Ports: Indicates the number of SRS ports.
- resourceType: Indicates wither SRS transmission is periodic, semi-persistent, or aperiodic.
- periodicityAndOffset-p (or periodicityAndOffset-sp): Indicates a slot level SRS period and slot offset for a periodic or semi-persistent SRS resource. SRS resources in a same SRS resource set may have a same slot level period. For the aperiodically configured SRS resource set, the slot level offset is defined by slotOffset that is a higher layer parameter.
- resourceMapping: Defines an OFDM symbol position of an SRS resource in one slot. May include startPosition indicating a start OFDM symbol in the SRS resource, nrofSymbols indicating the number of consecutive OFDM symbols that may be used for SRS transmission, and repetitionFactor indicating repetitions of an SRS.
- freqHopping: Provides parameters for SRS frequency hopping.
- freqDomainPosition, freqDomainShift: Used to determine frequency domain positions of SRS resources.
- transmissionComb: Includes parameters used to generate an SRS sequence to be transmitted on an SRS resource.
- sequenceId: Indicates an SRS sequence ID.
- SpatialRelationInfo: Provides a configuration for a beam direction or a spatial relation between a reference RS and a target SRS. Such a configuration configures, as the reference RS, one of an SSB index received from a specific serving cell together with an ID of the serving cell, a CSI-RS index, and transmitted SRS information (resource ID and uplink BWP ID), and thus the target SRS may be transmitted by using a same spatial domain transmission filter (or beam direction) as a spatial domain filter used to receive or transmit the reference RS.

In an NR-MIMIO system, the base station transmits such configuration information for SRS transmission to the terminal, so as to support the hybrid beamforming. The terminal may transmit a plurality of SRSs in different directions by using the configuration information. The base station notifies the terminal of rank information, transmission precoding information for uplink, and/or an SRS transmission beam direction (i.e., an SRS index), determined based on the received SRS, and the terminal may transmit an uplink transmission signal, based on the pieces of information obtained from the base station.

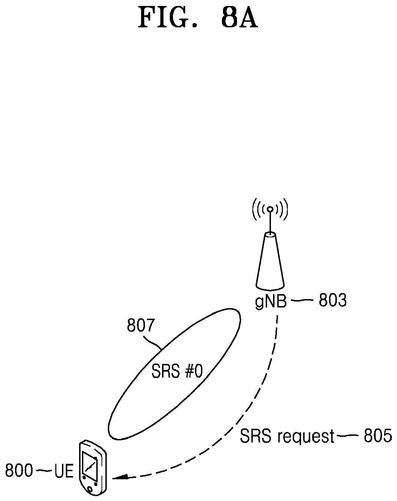

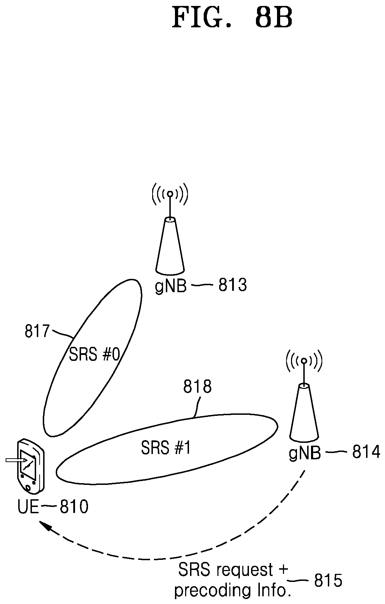

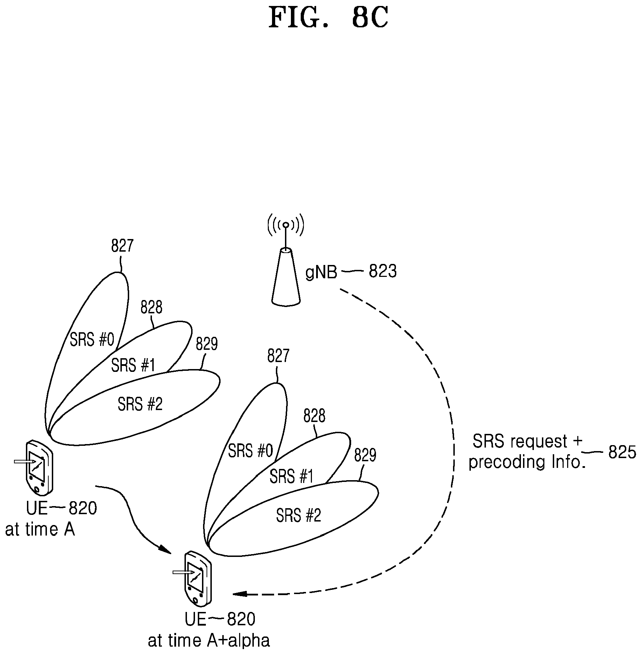

FIGS. 8A, 8B, and 8C are diagrams showing various operating scenarios of an SRS. The operating scenarios during SRS transmission will be described with reference to FIGS. 8A to 8C.

Referring to FIG. 8A, a gNB 803 may configure a LTE 800 with a beam in one direction. In the present disclosure, a gNB configuring beam/precoding in one direction may include not applying beam/precoding or applying a wide beam. The LTE 800 may transmit an SRS 807 according to an SRS period and slot offset when a transmission type of an SRS is a periodic SRS or semi-persistent SRS, and transmit the SRS 807 according to an SRS request 805 within DCI (within a determined time after the SRS request is detected) when the transmission type of the SRS is an aperiodic SRS. Here, additional information for beam/precoding may not be required for transmission of the SRS 807.

Referring to FIG. 8B, gNBs 813 and 814 of a serving cell may configure a LTE 810 with beams in one or more directions, and the LTE 810 may transmit one or more SRSs 817 and 818 beamformed in the one or more directions. Here, each gNB may be a transmission/reception point (TRP), and when MT of an IAB node is assumed instead of a UE, each TRP may be a parent node or a TRP of a donor base station. For example, the SRS #0 817 may be beamformed in a direction of the gNB 813, and the SRS #1 818 may be beamformed in a direction of the gNB 814. Here, the SRS #0 817 and the SRS #1 818 may be configured to have respective SRS resources and/or antenna ports. In this regard, unlike the scenario of FIG. 8A, the gNBs 813 and 814 may instruct, to the LTE 810, an SRS request and SRS beam/precoding information 815.

Referring to FIG. 8C, a gNB 823 may configure a LTE 820 with beams in different directions, and the LTE 820 may transmit a plurality of SRSs 827, 828, and 829 beamformed in the different directions. For example, the gNB 823 may configure the LTE 820 to transmit the SRS #0 827, the SRS #1 828, and the SRS #2 829 by applying different beam/precoding thereto. Accordingly, even when mobility of the LTE 820 is high, stable communication may be performed through beam/precoding diversity.

For example, the UE 820 may provide channel information to the gNB 823 through the SRS #2 829 at a time A, and provide channel information to the gNB 823 through the SRS #0 827 at a time A+α. In this regard, unlike the scenario of FIG. 8A, the gNB 823 may instruct, to the LTE 820, an SRS request and SRS beam/precoding information 825.

Hereinabove, SRS transmission from among uplink channels/signals transmitted from a terminal has been mainly described, but the present disclosure may be identically or similarly applied to another uplink channel/signal, such as PRACH or UL DMRS, as in the SRS transmission.

The NR standards include a technology of supporting duplex flexibility in paired spectrum (for FDD) and unpaired spectrum (for TDD), and in particular, are designed to use a dynamic TDD method. In a multi-cell environment, when dynamic resource assignment is allowed for each cell, cross link interference (CLI) may occur between uplink and downlink. In a system supporting dynamic TDD, time durations configured in downlink by a base station A may overlap with time durations configured in uplink by a base station B, on a time domain. In this case, an uplink signal (for example, an SRS) transmitted by a terminal B within a cell of the adjacent base station B may interfere with a terminal A receiving a downlink signal within a cell of the base station A, and such interference is referred to as UE-to-UE CLI. Such LTE-to-LTE CLI aggravates data reception quality of the terminal A, and thus there is a need for a technology for alleviating the LTE-to-LTE CLI. Also, CLI caused by MT-to-MT, DU-to-MT, DU-to-DU, and MT-to-DU interferences may occur as described above, even in a scenario for operating an IAB node.

To alleviate the LTE-to-LTE CLI, interference measurement and report of L3 level may be performed by each terminal, and a base station may perform dynamic LTL/DL resource assignment, based on the interference measurement report from the terminal.

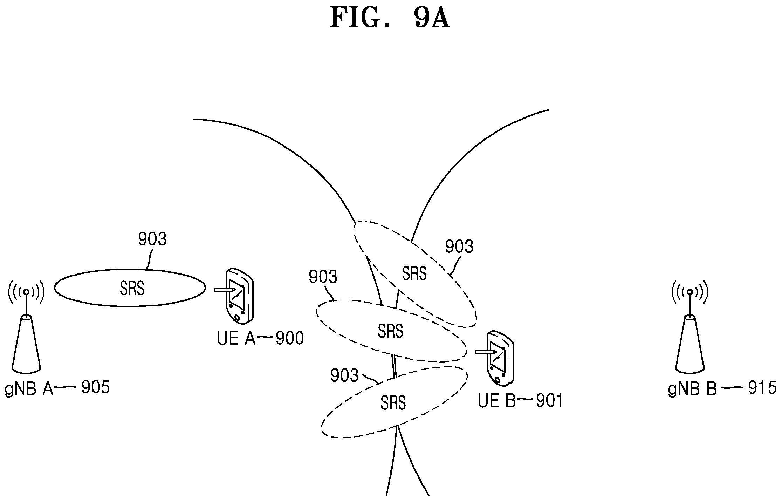

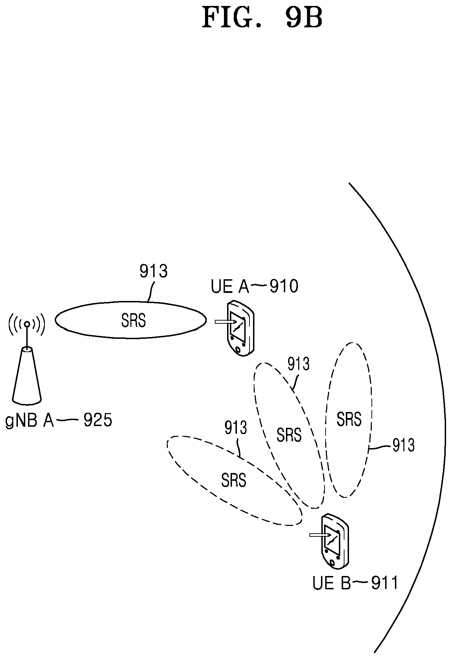

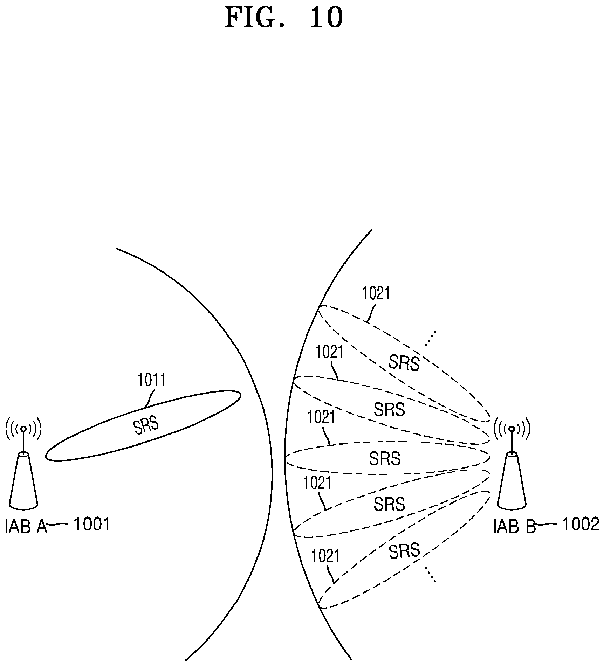

Various measurement methods may be considered for a terminal to measure interference, such as CLI. A first method is an SRS-reference signal received power (RSRP) method for measuring RSRP from an SRS, and a second method is a CLI-received signal strength indicator (RSSI) method for measuring received power of interference in a specific resource. When a terminal measures SRS-RSRP, the terminal may receive, from a base station of a serving cell, SRS measurement configuration information similar to SRS configuration information. The SRS measurement information may include information for measuring interference in a specific beam direction. The terminal may measure an SRS for the specific beam direction, based on the SRS measurement configuration information, and obtain an interference measurement result in each beam direction. Hereinafter, methods by which a base station instructs to measure interference in a specific beam direction and a terminal measures and reports the interference in the specific beam direction according to the instruction will be described in detail with reference to FIGS. 9 and 10.

FIGS. 9A and 9B are diagrams for describing SRS measurement scenarios in an NR system.

The scenario shown in FIG. 9A is for SRS measurement between adjacent UEs 900 and 901 within different cells.

Referring to FIG. 9A, the UE A 900 and the LTE B 901 respectively connected to gNBs 905 and 915 are considered in a situation where the two different gNBs 905 and 915 are adjacent to each other. The LTE A 900 is connected to the gNB A 905, and the LTE B 901 is connected to the gNB B 915. In other words, the gNB A 905 is a serving base station of the LTE A 900, and the gNB B 915 is a serving base station of the LTE B 901. Here, the gNB A 905 may configure, through higher layer signaling, or instruct, through a physical channel signal, the UE A 900 to transmit an SRS 903, and the UE A 900 may transmit the SRS 903 in response to the configuration or instruction from the gNB A 905. In FIG. 9A, an SRS is transmitted in one beam direction for convenience, but the various SRS transmission scenarios, like FIG. 8 including an embodiment of transmitting an SRS through a plurality of beam directions, may be applied to FIG. 9A.

Meanwhile, the gNB B 915 may configure, through higher layer signaling, the LTE B 901 to measure SRS CLI in a plurality of beam directions, and the LTE B 901 may measure the SRS 903 transmitted by the UE A 900, according to an SRS measurement configuration provided from the gNB B 915. The UE B 901 may measure the SRS 903 in the plurality of beam directions, and report a measurement result of the SRS 903 to the gNB B 915. Pieces of configuration information required to report the measurement result, for example, parameters indicating at least a transmission resource and transmission time, may be provided from the gNB B 915 to the LTE B 901 through higher layer signaling. Specific embodiments of the present disclosure, such as a configuration for interference measurement in a plurality of beam directions, a method of measuring interference through a configured beam direction, and a method of reporting measured interference, will be described after FIG. 10.

The scenario shown in FIG. 9B is for SRS measurement between adjacent LTEs 910 and 911 within one cell.

Referring to FIG. 9B, the LTE A 910 and the LTE B 911, which are connected to one gNB 925, are considered. The LTE A 910 is connected to the gNB A 925, and the UE B 911 is connected to the gNB A 925. Here, the gNB A 925 may configure, through higher layer signaling, or instruct, through a physical channel signal, the LTE A 910 to transmit an SRS 913, and the LTE A 910 may transmit the SRS 913 in response to the configuration or instruction from the gNB A 925. In FIG. 9B, an SRS is transmitted in one beam direction for convenience, but the various SRS transmission scenarios, like FIG. 8 including an embodiment of transmitting an SRS through a plurality of beam directions, may be applied to FIG. 9B.

Meanwhile, the gNB A 925 may configure, through higher layer signaling, the LTE B 911 to measure SRS CLI, and the LTE B 911 may measure the SRS 913 transmitted by the LTE A 910, according to an SRS measurement configuration provided from the gNB A 925. The LTE B 911 may measure the SRS 913 in a plurality of beam directions, and report a measurement result of the SRS 913 to the gNB A 925. Pieces of configuration information required to report the measurement result, for example, parameters indicating at least a transmission resource and transmission time, may be provided from the gNB A 925 to the UE B 911 through higher layer signaling. Specific embodiments of the present disclosure, such as a configuration for interference measurement in a plurality of beam directions, a method of measuring interference through a configured beam direction, and a method of reporting measured interference, will be described after FIG. 10.

FIG. 10 is a diagram for describing an SRS measurement scenario of an IAB node in an NR system. The scenario shown in FIG. 10 is for SRS measurement between adjacent IAB nodes 1001 and 1002 within different cells.

Referring to FIG. 10, a situation in which an SRS is transmitted between IAB nodes and SRS interference is measured is considered when two different IAB nodes 1001 and 1002 are adjacent to each other. In an embodiment of the present disclosure, it is described that an IAB node transmits an SRS or measures SRS interference, but unless stated otherwise, it may be determined that a DU or MT of the IAB node transmits a specific RS, and the DU or MT of the IAB node receives a configuration according to an embodiment of the present disclosure, and measures and reports the RS interference.

Although not illustrated, the IAB node A 1001 may be wirelessly connected to one donor base station or parent node. Hereinafter, the donor base station or parent node to which the IAB node A 1001 is connected may be referred to as a gNB A for convenience of description. The IAB node B 1002 may be wirelessly connected to the gNB A, or wirelessly connected to a donor base station or parent node different from the gNB A. Hereinafter, the donor base station or parent node different from the gNB A may be referred to as a gNB B for convenience of description. Here, the gNB A may configure, through higher layer signaling, or instruct, through a physical channel signal, the IAB node A 1001 to transmit an SRS 1011. The IAB node A 1001 may transmit the SRS 1011 according to the configuration or instruction from the gNB A. In FIG. 10, an SRS is transmitted in one beam direction for convenience, but the various SRS transmission scenarios, like FIG. 8 including an embodiment of transmitting an SRS through a plurality of beam directions, may be applied to FIG. 10 identically or similarly.

Meanwhile, the gNB B may configure, through higher layer signaling, the IAB node B 1002 to measure SRS CLI in a plurality of beam directions. The IAB node B 1002 may measure the SRS 1011 transmitted by the IAB node A 1001, according to the SRS measurement configuration provided from the gNB B. The IAB node B 1002 may measure an SRS 1021 in the plurality of beam directions, and report a measurement result of the SRS 1021 to the gNB B. Pieces of configuration information required to report the measurement result, for example, parameters indicating at least a transmission resource and transmission time, may be provided from the gNB B to the IAB node B 1002 through higher layer signaling. Specific embodiments of the present disclosure, such as a configuration for interference measurement in a plurality of beam directions, a method of measuring interference through a configured beam direction, and a method of reporting measured interference, will now be described.

### <Report on Preferred Transmission Beam Direction and Reception Beam Direction in Plurality of Beam Directions>

A base station may obtain, from a terminal, information about a transmission beam direction or reception beam direction for each SSB, RS, and channel, which is preferred by the terminal. The information about the transmission beam direction and reception beam direction may be indirectly obtained from the terminal by mapping on a corresponding PRACH transmission beam direction for an SSB reception beam direction, or may be obtained through a report on a preferred transmission beam direction and a preferred reception beam direction for each RS or channel of the terminal. The report may be transmitted from the terminal to the base station through an uplink control channel or an uplink data channel.

### <Configuration for Interference Measurement in Plurality of Beam Directions>

As a first method, at least one specific reception beam direction for interference measurement may be included in a higher configuration including a resource configuration of RS for interference measurement. For example, when the RS for interference measurement is an SRS, a SpatialRelationInfo parameter in an SRS resource configuration for interference measurement may include information about a reception beam direction such that interference measurement may be performed through the specific reception beam direction. The information may be used, together with a specific serving cell ID, to configure one of an SSB index received from a serving cell, a CSI-RS index, and transmitted SRS information (resource ID and uplink BWP ID), as a reference RS. A spatial domain filter (or a beam direction) that is the same as a spatial domain filter used when the reference RS is received or transmitted may be used to measure interference of a target SRS. Alternatively, the reference RS may be configured as a reference RS used in a PDCCH received by the serving cell. In detail, the reference RS may be configured as an RS configured to be qcl-Type corresponding to a type d corresponding to quasi co-location (QCL) assumption of a CORESET of a lowest index (for example, a lowest CORESET ID from among CORESET IDs configured in a controlResourceSetId parameter) in an active downlink BWP of the serving cell. The interference of the target SRS may be measured by using a spatial domain filter (or a beam direction) that is the same as a spatial domain filter used when the reference RS is transmitted or received. Alternatively, the reference RS may be configured as a reference RS used in a PDSCH received by the serving cell. In detail, when a terminal is not configured with an arbitrary CORESET in the active downlink BWP of the serving cell, the reference RS may be configured as an RS configured to be qcl-Type corresponding to a type d in an activated TCI state of a lowest index applicable to the PDSCH in the active downlink BWP of the serving cell. The interference of the target SRS may be measured by using a spatial domain filter (or a beam direction) that is the same as a spatial domain filter used when the reference RS is transmitted or received. Alternatively, the interference of the target SRS may be measured by using a spatial domain filter (or a beam direction) that is the same as a spatial domain filter used when the reference RS is received or transmitted, by configuring a specific RS that is not mentioned above or an RS used for a channel as the reference RS.

As a second method, information about a specific reception beam direction for interference measurement may be included in downlink control information of a downlink control channel. A base station may transmit the downlink control channel by including the specific reception beam direction information for the interference measurement, and a terminal may receive the downlink control channel and obtain the information about the specific reception beam direction for the interference measurement in the downlink control information. The terminal may measure interference, based on the specific reception beam direction.

The beam direction information may be indicated through the downlink control channel only for all reception beam directions or a partial set of reception beam directions in a plurality of reception beam directions by configuring, by the base station to the terminal, the plurality of reception beam directions for interference measurement through a higher signal. The plurality of reception beam directions may include configuring one of an SSB index, a CSI-RS index, and transmitted SRS information (a resource ID and uplink BWP ID) as a reference RS, as described in the first method, or configuring a reference RS associated with PDCCH or PDSCH reception in the first method.

### <Interference Measurement Method in Plurality of Beam Directions>

A terminal may receive a beam direction configuration for interference measurement from a base station, and measure interference received by the terminal, based on a beam direction. As described in FIG. 9 or FIG. 10, the terminal or an IAB node may generate an interference measurement result received for each reception beam direction, when measuring interference received in a specific beam direction. For example, when reception beam directions configured in the terminal are A, B, C, and interference is measured in each beam direction according to a time interval (configured through a higher signal or defined by the standard specifications), the terminal may not mix interference received in A, interference received in B, and interference received in C. In other words, a measurement result for the beam direction A may be generated by using only the interference received in A, a measurement result for the beam direction B may be generated by using only the interference received in B, and a measurement result for the beam direction C may be generated by using only the interference received in C. An example of a method of generating the measurement result may include averaging measurement values received every period.

Next, when the IAB node (in particular, MT of the IAB node) measures interference in a plurality of beam directions, there may be a transmission/reception collision between a DU of the IAB node and the MT of the IAB node, and interference measurement may be adversely affected (taking a long time). The transmission/reception collision may occur between the DU and MT of the IAB node when the IAB node reports half duplex constraint to a donor base station or parent node, and a method of reducing an effect on the interference measurement in this case will be described. Referring to FIG. 10 in detail, when MT of the IAB node A 1001 transmits the SRS 1011 in a slot i, transmission of the MT may collide with reception of uplink data (or an uplink control channel/uplink RS) of a DU of the IAB node A 1001 in the slot i. Even when the slot i is configured as a hard type and the DU of the IAB node A 1001 has transmission/reception priority over the MT, the IAB node A 1001 may prioritize transmission of the SRS 1011 of the MT. Also, in FIG. 10, when MT of the IAB node B 1002 receives and measures the SRS 1021 in the slot i, the reception of the MT may collide with transmission of downlink data (or a downlink control channel/downlink RS) of a DU of the IAB node B 1002 in the slot i. Even when the slot i is configured as a hard type and the DU of the IAB node B 1002 has transmission/reception priority over the MT, the IAB node B 1002 may prioritize reception and measurement of the SRS 1021 of the MT.

### <Report on Interference Measurement Result measured in Plurality of Beam Directions>

A terminal or IAB node may report, to a base station, a donor base station, or a parent node, information about an interference measurement result measured in a plurality of beam directions. The interference measurement information may include an interference measurement result value, a reception beam direction of measuring the interference result, and/or a transmission beam direction associated with the reception beam direction. The information about the interference measurement result may be transmitted to the base station or the IAB node through an uplink data channel or uplink control channel. A configuration for a time and resources required for the measurement result report may be received from the base station, the donor base station, or the parent node.

### <Interference Measurement Method when Beam Direction for Interference Measurement is not Configured>

A terminal may receive a beam direction configuration for interference measurement from a base station, and measure interference received by the terminal, based on a beam direction. However, when the terminal does not receive the beam direction configuration for the interference measurement, an operation of the terminal on a beam for the interference measurement may be defined as follows. As a first method, the terminal may measure interference in all directions instead of a specific beam direction. Here, the terminal may generate measurement results together for all beam directions received and measured by the terminal. An example of a method of generating the measurement result may include averaging measurement values received every period regardless of a beam direction. As a second method, a specific beam direction (or a default beam direction) of which interference is to be measured by the terminal may be defined in the standard specifications or pre-determined, and instructed from the base station to the terminal. For example, one of an SSB index, a CSI-RS index, transmitted SRS information (a resource ID and uplink BWP ID), which are described in the first method of <Configuration for Interference Measurement in Plurality of Beam Directions>, may be defined as a reference RS in the standard specifications or may be pre-determined as the reference RS, and may be instructed from the base station to the terminal. Alternatively, a reference RS associated with PDCCH or PDSCH reception in the first method may be defined according to the standard specifications or may be pre-determined, and may be instructed from the base station to the terminal.

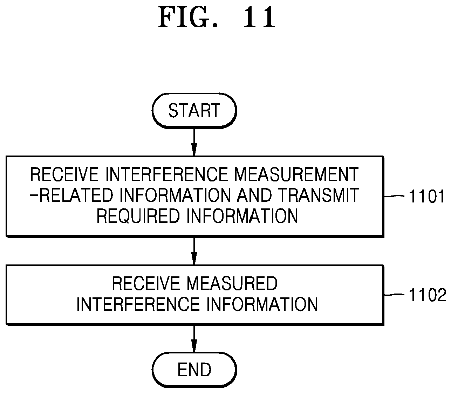

FIG. 11 is a diagram showing operations of a base station or a parent IAB node in a wireless communication system, according to an embodiment of the present disclosure.

Referring to FIG. 11, in operation 1101, the base station or parent IAB node (or a parent node) may receive, from a terminal or an IAB node, interference measurement-related information and transmit required information to the terminal or IAB node, according to an embodiment of the present disclosure. The interference measurement-related information may include, for example, information about a transmission beam or reception beam direction preferred by the terminal. The required information may include, for example, at least one of interference measurement configuration information in a plurality of beam directions, information about a direction of a specific reception beam, a parameter indicating a transmission resource of RS (for example, SRS) for interference measurement, a parameter indicating a transmission time of RS (for example, SRS) for interference measurement, a parameter indicating a resource required for a measurement result report, a parameter indicating a time required for a measurement result report, or information about a default beam direction. In operation 1102, the base station or parent IAB node may receive measured interference information, according to an embodiment of the present disclosure.

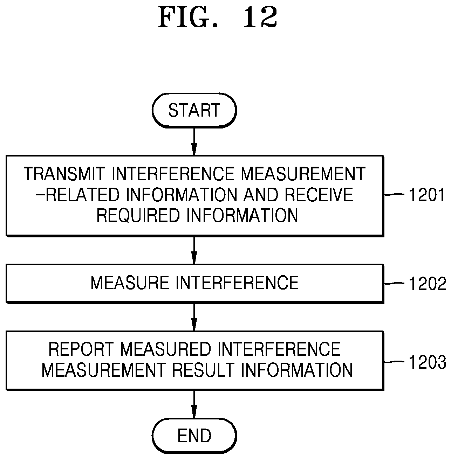

FIG. 12 is a diagram showing operations of a terminal or an IAB node in a wireless communication system, according to an embodiment of the present disclosure.

Referring to FIG. 12, in operation 1201, the terminal or IAB node may transmit interference measurement-related information to a base station or parent IAB node (or a parent node), and receive required information from the base station or parent IAB node. The interference measurement-related information may include, for example, information about a transmission beam or reception beam direction preferred by the terminal. The required information may include, for example, at least one of interference measurement configuration information, information about a direction of a specific reception beam, a parameter indicating a transmission resource of RS (for example, SRS) for interference measurement, a parameter indicating a transmission time of RS (for example, SRS) for interference measurement, a parameter indicating a resource required for a measurement result report, a parameter indicating a time required for a measurement result report, or information about a default beam direction. In operation 1202, the terminal or IAB node may measure interference by referring to the required information for the interference measurement, according to an embodiment of the present disclosure. In operation 1203, the terminal or IAB node may report, to the base station or parent IAB node, information about a measured interference measurement result, according to an embodiment of the present disclosure.

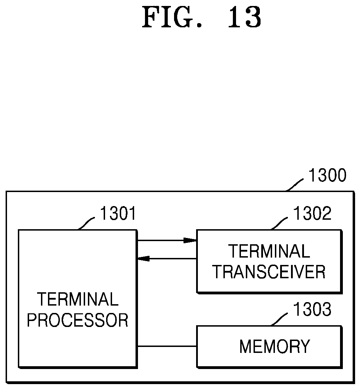

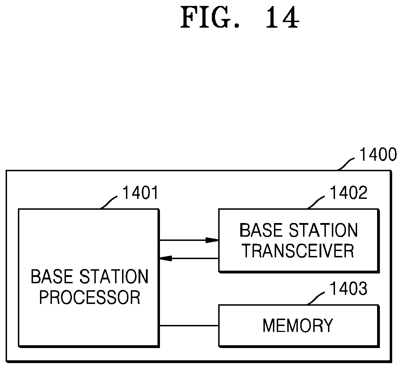

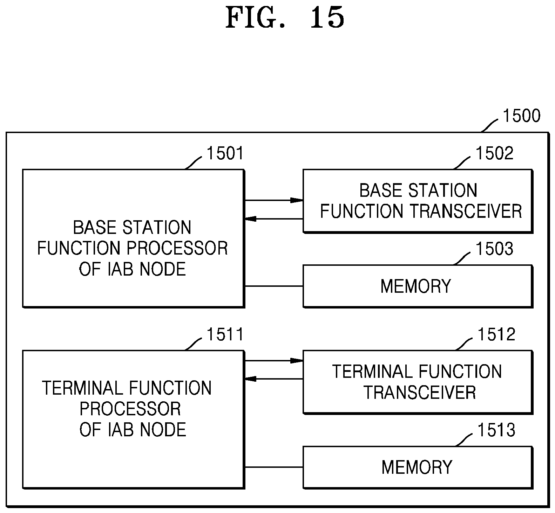

FIGS. 13 and 14 respectively illustrate configurations of a terminal and a base station, for performing the embodiments of the present disclosure. Also, FIG. 15 illustrates a configuration of an apparatus of an IAB node. Transmission/reception methods of a base station (donor base station) for transmitting/receiving with an IAB node in a backhaul link through mmWave, and of a terminal transmitting/receiving with the IAB node in an access link, when a signal is transmitted/received in the backhaul link or access link through the IAB node in a 5G communication system described in the embodiments, are illustrated, and the configurations of the base station, terminal, and IAB node may operate according to respective embodiments to perform the transmission/reception methods.

FIG. 13 is a diagram showing a configuration of a terminal, according to an embodiment of the present disclosure.

Referring to FIG. 13, a terminal 1300 of the present disclosure may include a terminal processor 1301, a terminal transceiver 1302, and a memory 1303. According to various embodiments, a configuration of the terminal 1300 is not limited to FIG. 13. For example, the terminal 1300 may include more components that are not illustrated, and some components may be implemented differently from illustrated. For example, the terminal transceiver 1302 may be implemented as a terminal transmitter and a terminal receiver.

The terminal processor 1301 may control a series of processes by which the terminal 1300 may operate, according to each or a combination of the embodiments of the present disclosure of FIGS. 1 to 12 described above. For example, the terminal processor 1301 may control access link transmission/reception with a base station or IAB node, according to embodiments of the present disclosure. According to various embodiments, the terminal processor 1301 may be understood as a processor. The terminal transceiver 1302 may transmit/receive a signal to/from the base station. The signal may include at least one of control information and data. In this regard, the terminal transceiver 1302 may include a radio frequency (RF) transmitter for up-converting and amplifying a frequency of a transmitted signal, and an RF receiver for low-noise amplifying a received signal and down-converting a frequency. Also, the terminal transceiver 1302 may receive a signal through a wireless channel and output the same to the terminal processor 1301, and transmit a signal output from the terminal processor 1301 through a wireless channel. The memory 1303 may store data processed by the terminal processor 1301 or transmitted through the terminal transceiver 1302.

FIG. 14 is a diagram showing a configuration of a base station (donor base station), according to an embodiment of the present disclosure.

Referring to FIG. 14, a base station 1400 of the present disclosure may include a base station processor 1401, a base station transceiver 1402, and a memory 1403. According to various embodiments, a configuration of the base station 1400 is not limited to FIG. 14. For example, the base station 1400 may include more components that are not illustrated, and some components may be implemented differently from illustrated. For example, the base station transceiver 1402 may be implemented as a base station transmitter and a base station receiver.

The base station processor 1401 may control a series of processes by which the base station 1400 may operate, according to each or a combination of the embodiments of the present disclosure of FIGS. 1 to 12 described above. For example, the base station processor 1401 may control access link transmission/reception and backhaul link transmission/reception with an IAB node, according to embodiments of the present disclosure. According to various embodiments, the base station processor 1401 may be understood as a processor. The base station transceiver 1402 may transmit/receive a signal to/from a terminal or the IAB node. The signal may include at least one of control information and data. In this regard, the base station transceiver 1402 may include an RF transmitter for up-converting and amplifying a frequency of a transmitted signal, and an RF receiver for low-noise amplifying a received signal and down-converting a frequency. Also, the base station transceiver 1402 may receive a signal through a wireless channel and output the same to the base station processor 1401, and transmit a signal output from the base station processor 1401 through a wireless channel. The memory 1403 may store data processed by the base station processor 1401 or transmitted through the base station transceiver 1402.

FIG. 15 is a diagram showing a configuration of an IAB node, according to an embodiment of the present disclosure.

Referring to FIG. 15, an IAB node 1500 of the present disclosure may include a base station function processor 1501, a base station function transceiver 1502, and a memory 1503 of the IAB node for transmitting/receiving with a lower (or child) IAB node through (wireless) backhaul link. Also, the IAB node may include a terminal function processor 1511, a terminal function transceiver 1512, and a memory 1513 of the IAB node for initially accessing a higher (or parent) IAB node and/or donor base station, transmitting/receiving a higher layer signal before backhaul link transmission/reception, and transmitting/receiving with the higher (or parent) IAB node and donor base station through (wireless) backhaul link. According to various embodiments, a configuration of the IAB node 1500 is not limited to FIG. 15. For example, the IAB node 1500 may include more components that are not illustrated, and some components may be implemented differently from illustrated. For example, the terminal function transceiver 1502 may be implemented as a terminal function transmitter and a terminal function receiver, and the base station function transceiver 1502 may be implemented as a base station function transmitter and a base station function receiver. The memory 1503 may store data processed by the base station function processor 1501 or transmitted through the base station function transceiver 1502. The memory 1504 may store data processed by the terminal function processor 1511 or transmitted through the terminal function transceiver 1512.

The base station function processor 1501 of the IAB node may control a series of processes such that the IAB node may operate like a base station, according to the embodiment of the present disclosure described above, and for example, may perform functions of a DU of the IAB node described above. For example, the base station function processor 1501 may control access link transmission/reception with a terminal and backhaul link transmission/reception with a lower IAB node, according to embodiments of the present disclosure. According to an embodiment of the present disclosure, the base station function transceiver 1502 may be referred to as a first transceiver. The first transceiver may transmit/receive a signal to/from the lower (or child) IAB node and the terminal. The signal may include at least one of control information and data. In this regard, the first transceiver may include an RF transmitter for up-converting and amplifying a frequency of a transmitted signal, and an RF receiver for low-noise amplifying a received signal and down-converting a frequency. Also, the first transceiver may receive a signal through a wireless channel and output the same to the base station function processor 1501, and transmit a signal output from the base station function processor 1501 through a wireless channel.

The terminal function processor 1511 of the IAB node may control a series of processes such that the lower (or child) IAB node operates like a terminal for data transmission/reception with a donor base station or higher (or parent) IAB node, according to the embodiment of the present disclosure described above, and for example, may perform functions of MT of the IAB node described above. For example, the terminal function processor 1511 may control transmission/reception through a (wireless) backhaul link with the donor base station and/or the higher (or parent) IAB node, according to an embodiment of the present disclosure. According to an embodiment of the present disclosure, the terminal function transceiver 1512 may be referred to as a second transceiver. The second transceiver may transmit/receive a signal to/from the donor base station and the higher IAB node. The signal may include at least one of control information and data. In this regard, the second transceiver may include an RF transmitter for up-converting and amplifying a frequency of a transmitted signal, and an RF receiver for low-noise amplifying a received signal and down-converting a frequency. Also, the second transceiver may receive a signal through a wireless channel and output the same to the terminal function processor 1511, and transmit a signal output from the terminal function processor 1511 through a wireless channel.

Meanwhile, the base station function processor 1501 of the IAB node and the terminal function processor 1511 of the IAB node, which are included in the IAB node of FIG. 15 may be integrated and implemented as an IAB node processor. In this case, the IAB node processor may control functions of the DU and the MT together in the IAB node. The base station function processor 1501, the terminal function processor 1511, and the IAB node processor may be implemented as at least one processor. The first transceiver and the second transceiver may be individually provided or may be implemented as one integrated transceiver.

According to an embodiment of the present disclosure, a method, performed by an electronic device, of reporting interference of a target signal transmitted from another electronic device to a base station or a parent node, includes receiving, from the base station or the parent node, configuration information and beam-related information for measuring the interference of the target signal, determining at least one direction for measuring the interference, based on the beam-related information, measuring the interference of the target signal, based on the received configuration information and the determined at least one direction, and transmitting information about the measured interference to the base station or the parent node.

According to an embodiment, the beam-related information may be included in resource configuration information for the electronic device, received from the base station or the parent node. According to an embodiment, the method may further include determining a receiving direction of at least one reference signal, based on the beam-related information, and determining the at least one direction for measuring the interference, based on the determined receiving direction of the at least one reference signal.

According to an embodiment, the beam-related information may be included in downlink control information received from the base station or the parent node.

According to an embodiment, the information about the measured interference may include at least one interference measurement result measured for each of the at least one direction. According to an embodiment, the at least one interference measurement result may include an average value of values measured for a designated period, for each of the at least one direction.

According to an embodiment, the electronic device may be an integrated access and backhaul (IAB) node including a distributed unit (DU) and mobile termination (MT), and at a first time point, a receiving operation of the MT for measuring the interference may have priority over a transmitting operation of the DU.

According to an embodiment of the present disclosure, a method, performed by a base station, of obtaining, from an electronic device, a measurement result for interference of a target signal transmitted from another electronic device, includes transmitting, to the electronic device, beam-related information and configuration information for measuring the interference of the target signal, and receiving, from the electronic device, at least one direction determined based on the beam-related information, and information about the interference of the target signal measured based on the configuration information.

According to an embodiment, the beam-related information may be included in resource configuration information for the electronic device, the resource configuration information being transmitted to the electronic device. According to an embodiment, a receiving direction of at least one reference signal may be determined based on the beam-related information, and the at least one direction may be determined based on the determined receiving direction of the at least one reference signal.

According to an embodiment, the beam-related information may be included in downlink control information transmitted to the electronic device.

According to an embodiment, the information about the measured interference may include at least one interference measurement result measured for each of the at least one direction. According to an embodiment, the at least one interference measurement result may include an average value of values measured for a designated period, for each of the at least one direction.

According to an embodiment of the present disclosure, an electronic device for reporting, to a base station or a parent node, interference of a target signal transmitted from another electronic device, includes a transceiver configured to transmit or receive a signal, and at least one processor connected to the transceiver, wherein the at least one processor is configured to receive, from the base station or the parent node, configuration information and beam-related information for measuring the interference of the target signal, determine at least one direction for measuring the interference, based on the beam-related information, measure the interference of the target signal, based on the received configuration information and the determined at least one direction, and transmit information about the measured interference to the base station or the parent node.

According to an embodiment, the beam-related information may be included in downlink control information or resource configuration information for the electronic device, received from the base station or the parent node.

The embodiments of the present disclosure described herein are merely to easily describe technical content of the present disclosure and to promote understanding of the present disclosure, and do not limit the scope of the present disclosure. That is, it will be obvious to one of ordinary skill in the art that different modifications may be achieved based on the present disclosure. Also, the embodiments of the present disclosure may be combined with each other as required.

## Claims

1. A method of reporting, by an electronic device, to a base station or a parent node, interference of a target signal transmitted from another electronic device, the method comprising:
receiving, from the base station or the parent node, beam-related information and configuration information for measuring the interference of the target signal;
determining at least one direction for measuring the interference, based on the beam-related information;
measuring the interference of the target signal, based on the received configuration information and the determined at least one direction; and
transmitting information about the measured interference to the base station or the parent node.

2. The method of claim 1, wherein the beam-related information is included in resource configuration information for the electronic device, received from the base station or the parent node.

3. The method of claim 2, further comprising:
determining a receiving direction of at least one reference signal (RS), based on the beam-related information; and
determining the at least one direction for measuring the interference, based on the determined receiving direction of the at least one reference signal.

4. The method of claim 1, wherein the beam-related information is included in downlink control information received from the base station or the parent node.

5. The method of claim 1, wherein the information about the measured interference comprises at least one interference measurement result measured for each of the at least one direction.

6. The method of claim 5, wherein the at least one interference measurement result comprises an average value of values measured for a designated period, for each of the at least one direction.

7. The method of claim 1, wherein the electronic device is an integrated access and backhaul (IAB) node including a distributed unit (DU) and mobile termination (MT), and
at a first time point, a receiving operation of the MT for measuring the interference has priority over a transmitting operation of the DU.

8. A method of obtaining, by a base station, from an electronic device, a measurement result for interference of a target signal transmitted from another electronic device, the method comprising:
transmitting, to the electronic device, beam-related information and configuration information for measuring the interference of the target signal; and
receiving, from the electronic device, at least one direction determined based on the beam-related information, and information about the interference of the target signal measured based on the configuration information.

9. The method of claim 8, wherein the beam-related information is included in resource configuration information for the electronic device, transmitted to the electronic device.

10. The method of claim 9, wherein a receiving direction of at least one reference signal is determined based on the beam-related information, and
wherein the at least one direction is determined based on the determined receiving direction of the at least one reference signal.

11. The method of claim 8, wherein the beam-related information is included in downlink control information transmitted to the electronic device.

12. The method of claim 8, wherein the information about the measured interference comprises at least one interference measurement result measured for each of the at least one direction.

13. The method of claim 12, wherein the at least one interference measurement result comprises an average value of values measured for a designated period, for each of the at least one direction.

14. An electronic device for reporting, to a base station or a parent node, interference of a target signal transmitted from another electronic device, the electronic device comprising:
a transceiver configured to transmit or receive a signal; and
at least one processor connected to the transceiver,
wherein the at least one processor is configured to:
receive, from the base station or the parent node, beam-related information and configuration information for measuring the interference of the target signal;
determine at least one direction for measuring the interference, based on the beam-related information;
measure the interference of the target signal, based on the received configuration information and the determined at least one direction; and
transmit information about the measured interference to the base station or the parent node.

15. The electronic device of claim 14, wherein the beam-related information is included in downlink control information or resource configuration information for the electronic device, received from the base station or the parent node.
